# EUROPEAN PATENT APPLICATION

(11) **EP 2 736 284 A1**
(43) Date of publication of application: **28.05.2014**
(21) Application number: 12826257.3
(22) Date of filing: 25.06.2012
(51) Int. Cl.: H04W 24/00

(54) **CELL MEASUREMENT METHOD, INFORMATION PROCESSING METHOD, TERMINAL, BASE STATION AND NETWORK SYSTEM**

(30) Priority: 19.08.2011 CN 201110239951; 30.09.2011 CN 201110298109
(71) Applicant: Huawei Technologies Co., Ltd, Shenzhen, Guangdong 518129 (CN)
(72) Inventor: CHAI, Li, Shenzhen Guangdong 518129 (CN); SUN, Lixin, Shenzhen Guangdong 518129 (CN); LIN, Bo, Shenzhen Guangdong 518129 (CN)
(74) Representative: Goddar, Heinz J.
(86) International application number: PCT/CN2012/077410
(87) International publication number: WO 2013/026319

(57) **Abstract**

Embodiments of the present invention provide a cell measurement method. The method includes: detecting, by a terminal accessing a first cell, signaling of a third cell; and performing measurement on a second cell after the signaling of the third cell is detected, where the first cell has the same frequency as the third cell; the first cell and the second cell are inter-frequency cells; and the second cell is associated with the third cell. According to the solution, the embodiments of the present invention provide a cell measurement solution which is different from that in the prior art.

## Description

### CROSS-REFERENCE TO RELATED APPLICATIONS

This application claims priority to Chinese Patent Application No. 201110239951.0, filed with the Chinese Patent Office on August 19, 2011 and entitled "CELL MEASUREMENT METHOD, INFORMATION PROCESSING METHOD, TERMINAL, BASE STATION, AND NETWORK SYSTEM", and Chinese Patent Application No. 201110298109.4, filed with the Chinese Patent Office on September 30, 2011 and entitled "CELL MEASUREMENT METHOD, INFORMATION PROCESSING METHOD, TERMINAL, BASE STATION, AND NETWORK SYSTEM", which are incorporated herein by reference in their entireties.

### TECHNICAL FIELD

The present invention relates to the field of radio communication mobility management technologies, and in particular, to a cell measurement method, an information processing method, a terminal, a base station, a network system, and a network device.

### BACKGROUND

With the development of mobile communication technologies and the mass market deployment of 3G networks, high-rate and high-bandwidth services are providing rich application experience to people. Particularly, the recent massive growth of smartphones makes the communications industry more prosperous. However, this also poses more challenges in business operation. An operating network remains in a high-load state for a long time, and expanded capacity is soon occupied by added services. As a result, a low-cost and large-capacity solution is urgently required to solve this increasingly critical problem.

A heterogeneous network refers to a heterogeneous system, of different node types, having overlapping coverage by deploying a low-power node in a coverage region of a macro base station. The low-power node includes a WIFI·hotspot, an LTE-Lomo (low mobility, Low Mobility) node, and the like. The introduction of these low-power nodes solves the capacity problem described above.

However, an existing mobility management technology has no cell measurement solution specific to the case of overlapping coverage, for example, a measurement solution specific to the WIFI hotspot cell or LTE-Lomo cell described above. Regarding the case of overlapping coverage, one cell measurement solution is to perform measurement and searching constantly by using a dedicated radio frequency unit. For example, a UE supporting a WIFI function constantly performs a corresponding function to search for a WIFI hotspot cell. Because the WIFI cell is deployed in a distributed manner, a result of large power consumption is caused to the UE. Another cell measurement solution is to use a measurement solution which is the same as mobility management of a macro cell of a conventional homogeneous network. In this solution, measurement for a cell of a low-power node is started only in a case where a signal of a macro cell is weak. It is less possible for a UE to start the measurement, and therefore it is difficult for the cell of the low-power node to effectively share traffic of the macro cell.

### SUMMARY

A cell measurement method, an information processing method, a terminal, a base station, a network system, and a network device are provided.

A cell measurement method is provided, including:
detecting, by a terminal accessing a first cell, signaling of a third cell; and
performing measurement on a second cell after the signaling of the third cell is detected, where
the first cell has the same frequency as the third cells; the first cell and the second cell are inter-frequency cells; and the second cell is associated with the third cell.

An information processing method is provided, including:
receiving, by a base station of a first cell, association information, sent by a second base station, of a second cell and/or a third cell controlled by the second base station; receiving association information, sent by a second base station, of a second cell controlled by the second base station and a third cell controlled by a third base station; receiving association information, sent by a third base station, of a second cell controlled by a second base station and a third cell controlled by the third base station; or receiving association information, from an operation management system, of a second cell and a third cell, where the third cell has the same frequency as a first cell that is formed by the base station, and the second cell and the first cell are inter-frequency cells; and
generating the association information of the second cell and the third cell according to the received information, and storing the association information.

A terminal is provided, including:
a detecting unit, adapted to detect signaling of a third cell, where the third cell has the same frequency as a first cell that is accessed by the terminal; and
a measuring unit, adapted to perform measurement on a second cell after the detecting unit detects the signaling of the third cell, where the second cell is associated with the third cell, and the second cell and the first cell are inter-frequency cells.

A base station is provided, including:
a first radio frequency unit, adapted to form a second cell;
a second radio frequency unit, adapted to form a third cell which is an inter-frequency cell of the second cell; and
a processing unit, adapted to generate synchronous signaling according to a PCI in a specific third cell physical cell identifier (PCI) group, and send the generated synchronous signaling on the third cell by using the second radio frequency unit.

Another base station is provided, including:
a storing unit, adapted to store association information of a second cell and a third cell, where the third cell is an intra-frequency cell of a first cell formed by the base station, and the second cell is an inter-frequency cell of the first cell;
a transceiving unit, adapted to receive identification information of the third cell from a terminal, where the terminal accesses the first cell; and
a measurement configuring unit, adapted to obtain, according to correspondence stored by the storing unit and the identification information of the third cell received by the transceiving unit, information of the second cell which is associated with the third cell, and generate measurement configuration information regarding the second cell and deliver the measurement configuration information to the terminal.

Another base station is provided, including:
a communicating unit, adapted to receive information, send by a second base station, of a second cell and/or a third cell controlled by the second base station; or adapted to receive association information, sent by a second base station, of the second cell and the third cell that are controlled by the second base station; or adapted to receive information, sent by a second base station, of the second cell controlled by the second base station and information, sent by a third base station, of the third cell controlled by the third base station, where the third cell has the same frequency as a first cell that is formed by the base station, and the second cell and the first cell are inter-frequency cells; and
a processing unit, adapted to generate association information of the second cell and the third cell according to the received information, and store the association information to the storing unit.

Another base station is provided, including:
a radio frequency unit, adapted to form a first cell; and
a processing unit, adapted to broadcast, on the first cell, information of a specific third cell PCI group, and/or broadcast correspondence between information of a specific third cell PCI group and frequency information of a second cell, where a PCI in the specific third cell PCI group corresponds to a third cell which is an intra-frequency cell of the first cell, and the second cell is an inter-frequency cell of the first cell and is associated with the third cell.

A network system is provided, including:
a first base station, adapted to form a first cell;
a second base station, adapted to form a second cell which is an inter-frequency cell of the first cell; and
a third base station, adapted to form a third cell having the same coverage as the second cell, and send, on the third cell, synchronous signaling for a terminal to infer a PCI of the third cell, where the third cell is an intra-frequency cell of the first cell, and the PCI is a PCI in a specific third cell PCI group.

In the solution, a third cell associated with a second cell and having the same frequency as a first cell is deployed, so that a terminal accessing the first cell can determine, by detecting signaling of the third cell, whether the second cell exists, and when determining that the second cell exists, start measurement on the second cell; or whether the terminal approaches the second cell is monitored according to position information of the second cell obtained from a base station of the first cell and position information of the terminal accessing the first cell; and when it is detected that the terminal approaches the second cell, measurement of the terminal on the second cell is started. This provides a cell measurement solution which is different from that in the prior art.

Moreover, when the solution is applied to a scenario where multiple cells have overlapping coverage, on one hand, the solution reduces energy consumption for the UE because no constant cell searching is required; on the other hand, in a case where the first cell is a macro cell and the second cell is a low-power node cell, and a signal of the macro cell is strong, measurement on the low-power node cell can also be started by using the solution, where the measurement is started regardless of an impact of the signal of the macro cell, so that the low-power node cell can share traffic of the macro cell more quickly and efficiently.

### BRIEF DESCRIPTION OF DRAWINGS

FIG. 1 is a flowchart of a method according to an embodiment of the present invention;
FIG. 1a is another flowchart of a method according to an embodiment of the present invention;
FIG. 2 is a flowchart of a method according to another embodiment of the present invention;
FIG. 3 is a flowchart of a method according to another embodiment of the present invention;
FIG. 4 is another flowchart of a method according to another embodiment of the present invention;
FIG. 5 is a flowchart of a method according to Exemplary Preferred Embodiment 1 of the present invention;
FIG. 6 shows an exemplary application scenario of a method according to Exemplary Preferred Embodiment 1 of the present invention;
FIG. 7 is a flowchart of a method according to Exemplary Preferred Embodiment 2 of the present invention;
FIG. 8 is a schematic diagram of network deployment for a method according to Exemplary Preferred Embodiment 3 of the present invention;
FIG. 9 is another schematic diagram of network deployment for a method according to Exemplary Preferred Embodiment 3 of the present invention;
FIG. 10 is a flowchart of a method according to Exemplary Preferred Embodiment 3 of the present invention;
FIG. 10a is a flowchart of a method according to Exemplary Preferred Embodiment 4 of the present invention;
FIG. 10b is a flowchart of a method according to Exemplary Preferred Embodiment 5 of the present invention;
FIG. 11 is a schematic structural of a terminal according to an embodiment of the present invention;
FIG. 12 is another schematic structural of a terminal according to an embodiment of the present invention;
FIG. 13 is another schematic structural of a terminal according to an embodiment of the present invention;
FIG. 14 is another schematic structural of a terminal according to an embodiment of the present invention;
FIG. 15 is another schematic structural of a terminal according to an embodiment of the present invention;
FIG. 16 is another schematic structural of a terminal according to an embodiment of the present invention;
FIG. 17 is another schematic structural of a terminal according to an embodiment of the present invention;
FIG. 18 is a schematic structural diagram of a base station according to an embodiment of the present invention;
FIG. 19 is a schematic structural diagram of another base station according to an embodiment of the present invention;
FIG. 19a is a schematic structural diagram of another base station according to an embodiment of the present invention;
FIG. 19b is another schematic structural diagram of another base station according to an embodiment of the present invention;
FIG. 19c is a schematic structural diagram of another base station according to an embodiment of the present invention;
FIG. 20 is another schematic structural diagram of another base station according to an embodiment of the present invention;
FIG. 21 is a schematic structural of a network device according to an embodiment of the present invention;
FIG. 22 is another schematic structural of a network device according to an embodiment of the present invention;
FIG. 23 is another schematic structural of a network device according to an embodiment of the present invention;
FIG. 24 is another schematic structural of a network device according to an embodiment of the present invention; and
FIG. 25 is another schematic structural of a network device according to an embodiment of the present invention.

### DESCRIPTION OF EMBODIMENTS

To make the objectives, technical solutions and advantages, of the present invention more comprehensible, the following further describes the present invention in detail with reference to the accompanying drawings.

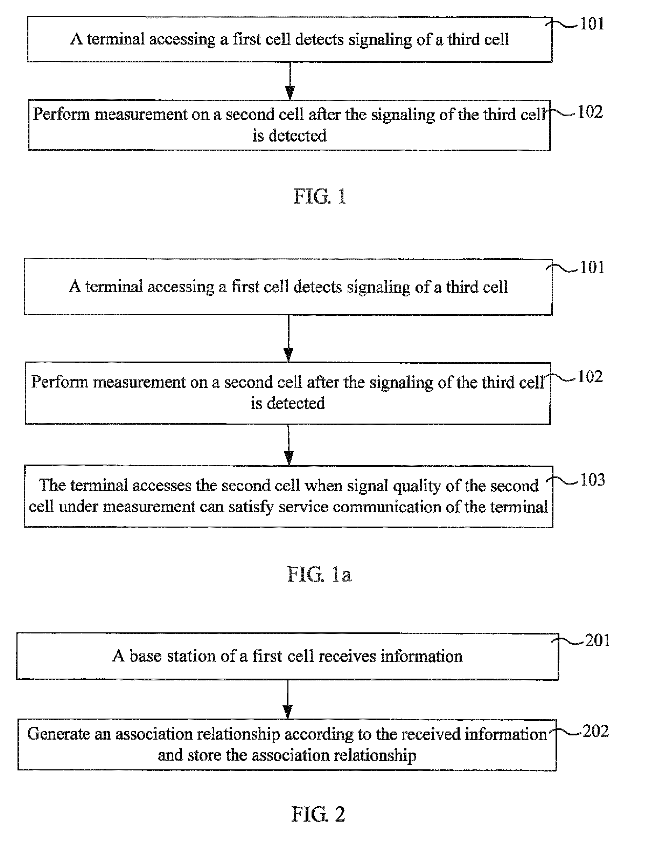

As shown in FIG. 1, a cell measurement method according to an embodiment includes the following steps:
Step 101: A terminal accessing a first cell detects signaling of a third cell.
Step 102: Perform measurement on a second cell after the signaling of the third cell is detected.

The first cell has the same frequency as the third cell; the first cell and the second cell are inter-frequency cells; and the second cell is associated with the third cell.

The first cell may be a macro cell, and the second cell is a cell within a coverage region of the macro cell or a cell neighboring the macro cell.

The second cell may be associated with the third cell in a manner where: the second cell and the third cell have the same coverage, or a coverage range of the third cell includes a coverage range of the second cell, where
the performing measurement on a second cell may include: determining, according to the detected signaling of the third cell, that the terminal approaches the second cell or enters the coverage range of the second cell, and then performing measurement on the second cell.

The terminal may save information of a specific third cell PCI group, where
the detecting, by a terminal accessing a first cell, signaling of a third cell may include: performing, by the terminal accessing the first cell, intra-frequency neighboring cell measurement; inferring, according to synchronous signaling detected in the measurement, a physical cell identifier PCI of a cell that sends the synchronous signaling; and determining whether the PCI belongs to the saved specific third cell PCI group, so as to determine whether the detected synchronous signaling is the signaling of the third cell.

The terminal may store the information of the specific third cell PCI group in advance. The terminal may also obtain, by receiving a radio resource control protocol (Radio Resource Control, RRC) message sent by a base station of the first cell, for example, dedicated RRC signaling, the information of the specific third cell PCI group included in the RRC signaling; obtain, by receiving a system broadcast message of the first cell, the information of the specific third cell PCI group included in the system broadcast message; or obtain, by receiving a system broadcast message of any neighboring cell of the first cell, the information of the specific third cell PCI group included in the system broadcast message of the neighboring cell.

The performing measurement on a second cell may include: performing, by the terminal, measurement on all frequencies that are supported by the terminal and different from the frequency of the first cell.

The terminal may save correspondence between the specific third cell PCI group and frequency information of the second cell, where
the performing, by the terminal accessing the first cell, measurement on a second cell after detecting the signaling of the third cell may include:
performing, by the terminal accessing the first cell, intra-frequency neighboring cell measurement; inferring, according to synchronous signaling detected in the measurement, a physical cell identifier PCI of a cell that sends the synchronous signaling; determining whether the PCI belongs to the specific third cell PCI group; and after determining that the PCI belongs to the specific third cell PCI group, obtaining, according to the correspondence, frequency information of the second cell corresponding to the specific third cell PCI group to which the PCI belongs; and
performing measurement according to the obtained frequency information of the second cell; or sending the frequency information of the second cell to the base station of the first cell, receiving measurement configuration information determined according to the frequency information of the second cell by the base station of the first cell and returned by the base station of the first cell, and then performing measurement according to the received measurement configuration information.

Similar to the information of the specific third cell PCI group described above, the correspondence between the specific third cell PCI group and the frequency information of the second cell and saved in the terminal may be stored in the terminal in advance; obtained by the terminal by receiving an RRC message, for example, dedicated RRC signaling, sent by the base station of the first cell; obtained by the terminal by receiving a system broadcast message of the first cell; or obtained by the terminal by receiving a system broadcast message of any neighboring cell of the first cell.

Before the performing measurement on a second cell, the method may further include:
sending, by the terminal, information of the third cell or an approach indication to the base station of the first cell, and receiving measurement configuration information returned by the base station of the first cell, where
the performing measurement on a second cell may include: performing measurement according to the received measurement configuration information.

The received measurement configuration information may include: measurement configuration information determined, according to frequency information of an inter-frequency cell within the coverage range of or neighboring the first cell, by the base station of the first cell after receiving the approach indication.

The approach indication may include the PCI, detected by the terminal, of the third cell, where
the received measurement configuration information may include: measurement configuration information determined by the base station of the first cell according to obtained frequency information of the second cell after receiving the approach indication, where the frequency information of the second cell is obtained according to the PCI in the approach indication and correspondence between the third cell PCI group and frequency information of the second cell and saved by the base station of the first cell;
or, the received measurement configuration information may include: measurement configuration information determined by the base station of the first cell according to determined frequency information of the second cell after receiving the approach indication, where the second cell associated with the third cell is determined according to a cell association relationship table configured in the base station of the first cell and the PCI included in the approach indication.

The approach indication may also include the frequency information, obtained by the terminal, of the second cell, where
the received measurement configuration information may include: measurement configuration information determined by the base station of the first cell according to the frequency information of the second cell in the approach indication.

The performing, by the terminal, measurement on all frequencies that are supported by the terminal and different from the frequency of the first cell may include:
determining, by the terminal, whether to enable a GAP; and if yes, performing measurement on the second cell on all the supported frequencies that are different from the frequency of the first cell according to the GAP, and sending a GAP pattern to a network side; otherwise, directly performing measurement on all the supported frequencies that are different from the frequency of the first cell.

The sent information of the third cell include: a measurement report that is periodically reported by the terminal after performing intra-frequency neighboring cell measurement according to the measurement configuration information delivered by the base station of the first cell, where
the received measurement configuration information which is returned by the base station of the first cell includes: measurement configuration information determined by the base station of the first cell according to determined frequency information of the second cell, where the second cell associated with the third cell is determined according to a third cell identifier in the measurement report and a cell association relationship table configured in the base station of the first cell.

After the starting, by the terminal, measurement on the second cell, as shown in FIG. 1a, this embodiment may further include:
Step 103: The terminal accesses the second cell when signal quality of the second cell under measurement can satisfy service communication of the terminal.

The accessing, by the terminal, the second cell may specifically include: accessing, by the terminal, the second cell, and disconnecting a signaling connection to the first cell;
or include: accessing, by the terminal, the second cell, and retaining a signaling connection to the first cell.

In the solution, a third cell associated with a second cell and having the same frequency as a first cell is deployed, so that a terminal accessing the first cell can determine, by detecting signaling of the third cell, whether the second cell exists, and when determining that the second cell exists, start measurement on the second cell, which provides a cell measurement solution which is different from that in the prior art. Moreover, when the solution is applied to a scenario where multiple cells have overlapping coverage, on one hand, the solution reduces energy consumption for the UE because no constant cell searching is required; on the other hand, in a case where the first cell is a macro cell and the second cell is a low-power node cell, and a signal of the macro cell is strong, measurement on the low-power node cell can also be started by using the solution, where the measurement is started regardless of an impact of the signal of the macro cell, so that the low-power node cell can share traffic of the macro cell more quickly and efficiently.

As shown in FIG. 2, an information processing method according to another embodiment of the present invention includes:
Step 201: A base station of a first cell receives association information, sent by a second base station, of a second cell and/or a third cell controlled by the second base station; receives association information, sent by a second base station, of a second cell controlled by the second base station and a third cell controlled by a third base station; receives association information, sent by a third base station, of a second cell controlled by a second base station and a third cell controlled by the third base station; or receives association information, from an operation management system, of a second cell and a third cell, where the third cell has the same frequency as a first cell that is formed by the base station, and the second cell and the first cell are inter-frequency cells.
Step 202: Generate the association information of the second cell and the third cell according to the received information, and store the association information to a storing unit.

Preferably, the received information is carried in an X2 setup request (SETUP REQUEST) message, an X2 setup response (SETUP RESPONSE) message, or an X2 ENB Configuration Update (ENB configuration update) message.

Further, in this embodiment, the base station of the first cell may execute the method embodiments described above and the following method embodiments, or various solutions in the following base station embodiments where the base station of the first cell communicates with a terminal accessing the first cell.

In this exemplary preferred embodiment, concepts of the first cell, the second cell, and the third cell may be the same as those in the foregoing embodiment, which are not described repeatedly herein.

By using the solution described above, a base station obtains and stores information of a second cell and a third cell that are associated, which can help a terminal to determine whether a cell accessed by the terminal has an associated cell, or can help a terminal accessing a first cell to obtain information of the second cell associated with the third cell that can be detected by the terminal, so that the terminal can perform measurement on the associated second cell.

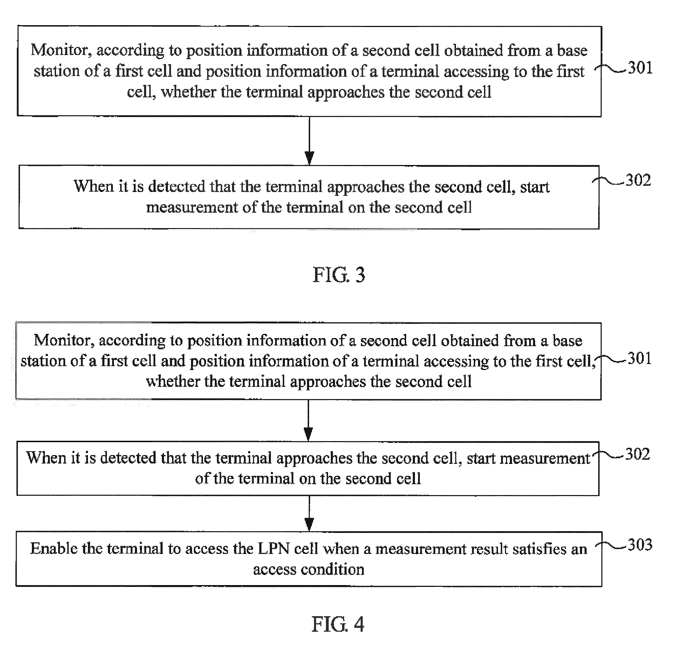

As shown in FIG. 3, another cell measurement method according to an embodiment includes the following steps:
Step 301: Monitor, according to position information of a second cell obtained from a base station of a first cell and position information of a terminal accessing to the first cell, whether the terminal approaches the second cell.

The first cell may be a macro cell; the second cell may be a cell within a coverage range of the macro cell or a cell neighboring the macro cell and having a coverage region in common, for example, a WiFi hotspot cell, a Lomo (a micro base station supporting low-speed movement, or referred to as a HIFI) cell, a dynamic spectrum share (Dynamic spectrum share, DSS) cell (that is, a cell where a downlink service may operate on an uplink resource, such as an uplink carrier of FDD or an uplink subframe of TDD), or another non-macro cell such as a micro (Micro) cell, a Pico (Pico) cell, a remote radio head (Remote Radio Head, RRH) cell, or a relay (Relay) cell.

The approaching the second cell by the terminal mentioned in this application document refers to that the terminal enters a coverage range of the second cell or a distance to the coverage range of the second cell is within a defined threshold.
Step 302: When it is detected that the terminal approaches the second cell, start measurement of the terminal on the second cell.

In this embodiment, position information of the terminal and the second cell is compared to determine whether to start measurement of the terminal on the second cell. On one hand, the terminal does not need to constantly search for a WIFI hotspot cell, which reduces energy consumption for the terminal. On the other hand, because the measurement on the second cell is performed regardless of signal quality of the first cell, the measurement on the second cell can also be started according position information even in a case where the signal quality of the first cell is very strong, which improves timeliness of measurement, and makes it possible for the second cell to share traffic of the terminal of the first cell more efficiently.

In addition, in this embodiment, position information data of the second cell is obtained from the base station, so that the terminal does not need to save data of the second cell. This saves storage space of the terminal on one hand, and ensures that information of the second cell near the terminal position can be obtained more quickly and accurately on the other hand, thereby starting measurement on the second cell more quickly and accurately.

For the convenience of description, the following part of the embodiment of the present invention is described by using an example where the first cell is a macro cell and the second cell is a low-power node (LPN) cell. It should be noted that the second cell is not limited to a low-power node cell. Some cells within a coverage range of or neighboring the macro cell and used to perform network traffic sharing for the macro cell, despite that transmit power of a cell base station or a cell node is not less than that of the macro cell, are also second cells.

The procedure shown in FIG. 3 may be performed by the base station or by the terminal.

When the procedure is performed by the base station, step 301 specifically is: obtaining, by the base station of the macro cell, position information of the terminal, obtaining position information of an LPN cell saved by the base station, and determining, according to the obtained information, whether the terminal approaches the LPN cell.

When the procedure is performed by the base station, in step 302, the starting measurement of the terminal on the LPN cell may include: delivering, by the base station of the macro cell, a notification message to the terminal to notify that the terminal approaches the LPN cell, so that the terminal starts measurement on the approached LPN cell according to the notification message;
or the starting the measurement of the terminal on the LPN cell may include: configuring, by the base station of the macro cell, measurement configuration information for the terminal, and delivering the configured measurement configuration information to the terminal, so that the terminal performs measurement on the approached LPN cell according to the configured measurement configuration information.

When the procedure is performed by the terminal, step 301 specifically is: obtaining, by the terminal, position information of the LPN cell, obtaining position information of the terminal, and determining, according to the obtained information, whether the terminal approaches the LPN cell.

The base station may broadcast, in a system broadcast message of the macro cell, position information of all or a part of LPN cells covered by the macro cell, or further broadcast position information of a neighboring LPN cell. In this way, the terminal may obtain the position information of the LPN cell by receiving the system broadcast message of the macro cell.

The position information of the terminal may be obtained by using a GPS positioning unit of the terminal, or the terminal may obtain the position information thereof by using another positioning technology.

When the procedure is performed by the terminal, in step 302, the starting measurement of the terminal on the LPN cell may include: starting, by a UE, measurement on the approached LPN cell.

When broadcasting the position information of the LPN cell, the base station also broadcasts information for performing measurement on the LPN cell, for example, a physical cell identifier (PCI) and/or global cell identifier (GCI) of the LPN cell; and the terminal may start measurement on the approached LPN cell according to the broadcast information for performing measurement on the LPN cell.

When the procedure is performed by the terminal, in step 302, the starting measurement of the terminal on the LPN cell may also include: notifying, by the UE, the base station of the macro cell of information that the UE approaches the LPN cell, receiving measurement configuration information of the LPN cell returned by the base station of the macro cell, and starting measurement on the approached LPN cell according to the measurement configuration information.

After the measurement of the terminal on the LPN cell is started, as shown in FIG. 4, this embodiment may further include:
Step 303: Enable the terminal to access the LPN cell when a measurement result satisfies an access condition.

Specifically, the measurement result satisfying the access condition may be that: signal quality of the LPN cell can satisfy service communication of the terminal. The terminal accesses the LPN cell in a case where the signal quality of the LPN cell can satisfy the service communication of the terminal; compared with a solution in the prior art where the terminal accesses the LPN cell only after signal quality of the macro cell and signal quality of the LPN cell are different by a certain degree, a possibility for the terminal to access the LPN cell is greatly increased, thereby implementing traffic sharing of the LPN cell for the macro cell more efficiently.

The accessing, by the terminal, the LPN cell may include: accessing, by the UE, the LPN cell, and disconnecting a signaling connection between the UE and the macro cell.

The accessing, by the terminal, the LPN cell may also include: accessing, by the UE, the LPN cell, and retaining a signaling connection between the UE and the macro cell.

After the retaining a signaling connection between the UE and the macro cell, the method may further include:
migrating, by the base station of the macro cell, all services of the UE to the LPN cell that is accessed by the UE.

After the retaining a signaling connection between the UE and the macro cell, the method may also further include: migrating, by the macro cell, a part of services of the UE to the LPN cell.

Specifically, after accessing the LPN cell successfully, the UE may send a piece of signaling to notify the base station of the information that the UE accesses the LPN cell successfully; and the base station determines, according to a service characteristic and a load condition of the macro cell, whether to migrate all services of the UE to the LPN cell or migrate a part of services of the UE to the LPN cell.

In the solution described above, whether a terminal approaches a second cell is monitored according to position information of the second cell obtained from a base station of a first cell and position information of the terminal accessing the first cell; and when it is detected that the terminal approaches the second cell, measurement of the terminal on the second cell is started. This provides a cell measurement solution which is different from that in the prior art. Moreover, when the solution is applied to a scenario where multiple cells have overlapping coverage, on one hand, the solution reduces energy consumption for the UE because no constant cell searching is required; on the other hand, in a case where the first cell is a macro cell and the second cell is a low-power node cell, and a signal of the macro cell is strong, measurement on the low-power node cell can also be started by using the solution, where the measurement is started regardless of an impact of the signal of the macro cell, so that the low-power node cell can share traffic of the macro cell more quickly and efficiently.

The following further describes the solution of cell measurement method embodiments with reference to several exemplary preferred embodiments.

### Exemplary Preferred Embodiment 1

In this embodiment, a base station of a macro cell obtains position information of a terminal; determines, according to the position information of the terminal and position information of an LPN cell obtained by the base station, whether to start measurement on the LPN cell; and enables the terminal to access the LPN cell when an access condition is satisfied, thereby implementing traffic sharing for the terminal in the macro cell more efficiently.

Position deployment information of an LPN cell in a network is saved in a database on a network side. The position deployment information may include correspondence between a base station ID (and/or a cell ID) and position information, where the position information herein may include the longitude, the latitude, and a height of the base station of the cell, or may further include range data, such as transmit power and/or a coverage radius.

| **Base Station ID** | **Position Information** |
|---|---|
| Base station 1 | Longitude latitude, height, ... |
| ...... | ...... |
| Base station N | Longitude, latitude, height, ... |

The position deployment information of the LPN cell may be directly saved in a base station and/or a background device of the base station, and/or be saved in a dedicated server, where the base station may obtain required position information by querying the dedicated server.

When the position deployment information of the LPN cell is saved in the base station and/or the background device of the base station, an involved LPN cell includes an LPN cell within a coverage range of the base station, or includes an LPN cell within the coverage range and a neighboring LPN cell. The position information may be exchanged by using an X2 interface between base stations. For example, when an LPN cell is added, a base station of the newly added LPN cell may help, by sending an X2 SETUP REQUEST message, an X2 SETUP RESPONSE message, or an X2 ENB configuration update message to the base station of the macro cell, update and improve position information of the base station of the LPN cell.

**Content of the X2 SETUP REQUEST message may be shown in the following table:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Global eNB ID | M | | 9.2.22 | | YES | reject |
| Served Cells | | *1 to maxCellineNB* | | Complete list of cells served by the eNB | YES | reject |
| >Served Cell Information | M | | 9.2.8 | | - | - |
| >Neighbour Information | | *0 to maxnoofNeighbours* | | | - | - |
| ...... | | | | | | |
| >>Position information | O | | | Position information | | |
| ...... | | | | | | |

In the above table, the information element, Served Cell Information, may be used to carry position information of a base station, where content of the information element may be as follows:

| **IE/Group Name** | **Presence** | **Range** | **IE type and reference** | **Semantics description** | **Criticality** | **Assigned Criticality** |
|---|---|---|---|---|---|---|
| PCI | M | | INTEGER (0..503,...) | Physical Cell ID | - | - |
| Cell ID | M | | ECGI 9.2.14 | | - | - |
| TAC | M | | OCTET STRING(2) | Tracking Area Code | - | - |
| Position information | O | | | Position information | | |
| ........ | | | | | | |

**Content of the X2 SETUP RESPONSE message may be shown in the following table:**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Global eNB ID | M | | 9.2.22 | | YES | reject |
| Served Cells | | *1 to maxCellineNB* | | Complete list of cells served by the eNB | YES | reject |
| >Served Cell Information | M | | 9.2.8 | | - | - |
| >Neighbour Information | | *0 to maxnoofNeighbours* | | | - | - |
| ...... | | | | | | |
| >>Position information | O | | | Position information | | |
| ...... | | | | | | |

Optionally, the base station may also collect a measurement report of a UE, and helps maintain position information of an LPN cell within the coverage range thereof or a neighboring LNP cell according to position information of a neighboring cell, such as position deployment information of a newly added LNP cell, included in the measurement report.

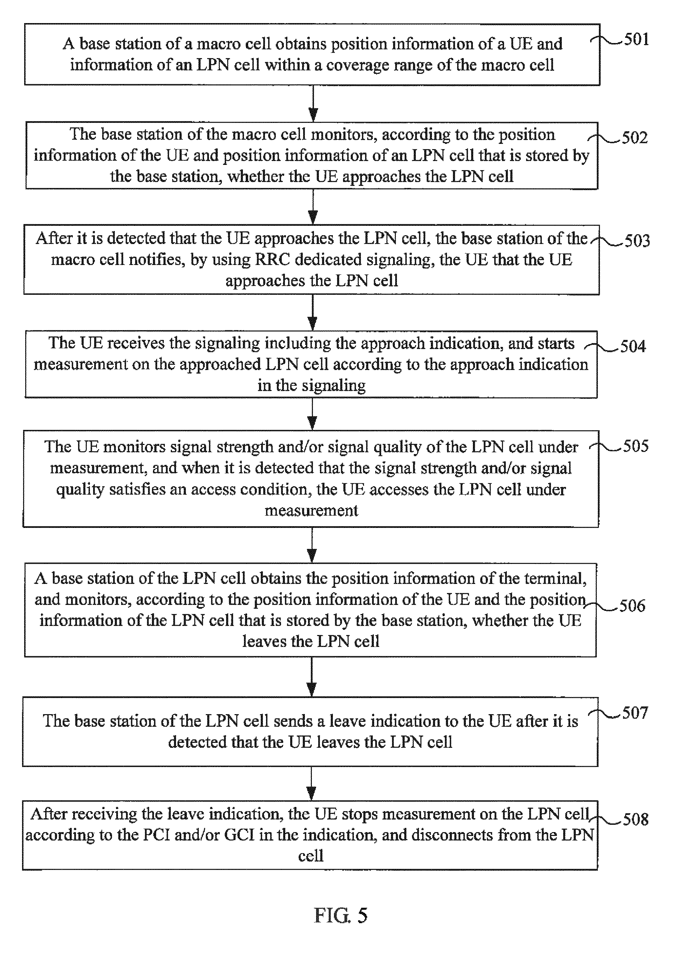

Specifically, as shown in FIG. 5, this embodiment includes the following steps in a specific implementation:
Step 501: A base station of a macro cell obtains position information of a UE and information of an LPN cell within a coverage range of the macro cell.

In this step, the base station of the macro cell may also obtain the position information of the UE, and position information of an LPN cell within a coverage range of the macro cell and neighboring the macro cell.

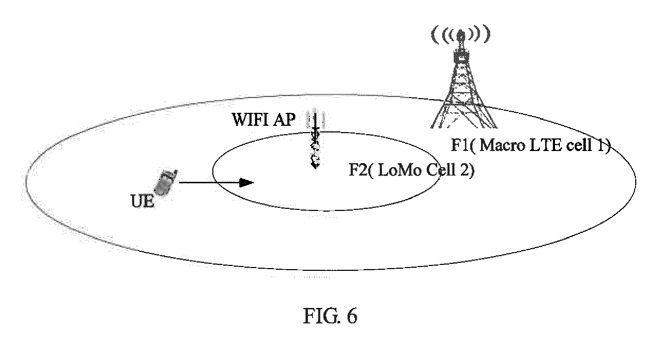

FIG. 6 shows an exemplary application scenario according to this embodiment. In this scenario, an LTE macro cell 1 is deployed on a frequency 1; an LPN cell 2, for example, a LOMO cell in the figure, is deployed on a frequency 2 within a coverage range of the macro cell, where a base station of the LOMO cell is a WIFI AP in the figure. A base station of the LTE macro cell (hereinafter briefly referred to as a macro cell) saves an ID of the WIFI AP, an ID of the LOMO cell 2, and position information of the WIFI AP. This embodiment is described by using an example where the saved position information includes the longitude, the latitude, a height, and a coverage radius.

In this step, the base station of the macro cell may periodically initiate positioning, for example, OTDOA positioning, for the UE, so as to obtain position information of the UE. A terminal may also periodically report position information thereof to the base station of the macro cell, for example, a terminal having a GPS function periodically reports, to the base station, position information thereof obtained by using the GPS function.
Step 502: The base station of the macro cell monitors, according to the position information of the UE and position information of an LPN cell that is stored by the base station, whether the UE approaches the LPN cell.

In this step, determining whether the UE approaches the LPN cell is determining whether the UE enters a coverage range of the LPN cell, or whether a distance to the coverage range of the LPN cell is within a defined threshold. The coverage range is calculated according to the longitude, the latitude, the height, and the coverage radius.
Step 503: After it is detected that the UE approaches the LPN cell, the base station of the macro cell notifies, by using RRC dedicated signaling, the UE that the UE approaches the LPN cell, where the signaling carries an approach indication, and the approach indication includes a PCI and/or GCI of the LPN cell that the UE approaches, or further includes: any one or more of a type of the approached cell, an ID of a base station node of the approached cell, and a type of the base station node of the approached cell.

In this step, the base station may also carry the approach indication by using Media Access Control control signaling (Media Access Control Control element, MAC CE) sent to the UE.
Step 504: The UE receives the signaling including the approach indication, and starts measurement on the approached LPN cell according to the approach indication in the signaling. A parameter for measurement includes signal strength and/or signal quality of a cell.

In this step, if a radio frequency for the terminal to perform measurement on the LPN cell is an independent radio frequency, the UE enables a radio frequency corresponding to the LPN cell, and then performs measurement on the LPN cell. If a radio frequency for the terminal to perform measurement on the LPN cell is a radio frequency shared with another cell, the UE shifts a center frequency to implement measurement on the another cell and the LPN cell; and/or the UE starts a time gap (GAP) on an enabled radio frequency to perform measurement on the LPN cell.
Step 505: The UE monitors signal strength and/or signal quality of the LPN cell under measurement, and when it is detected that the signal strength and/or signal quality satisfies an access condition, the UE accesses the LPN cell under measurement.

In this step, the access condition is that the signal strength and/or signal quality of the LPN cell satisfies a requirement of normal service communication of the UE. Specifically, a signal strength threshold and/or a signal quality threshold is set in the UE; and when the signal strength satisfies the signal strength threshold and/or the signal quality satisfies the signal quality threshold, the signal strength and/or the signal quality satisfies the requirement of normal communication of the UE. A specific value of the threshold may be -65 dbm.

In this step, if the radio frequency corresponding to the LPN cell is an independent radio frequency, the accessing, by the UE, the LPN cell under measurement is receiving, by the UE, data directly on the radio frequency corresponding to the LPN cell. Otherwise, the UE initiates an inter-frequency or inter-system handover procedure by sending a measurement report to the base station of the macro cell (that is, a source base station), so as to access the LPN cell. A specific handover procedure may be implemented with reference to a handover solution provided in the 3GPP protocol 36.300.

Moreover, after accessing the LPN cell, the UE may disconnect from the macro cell, or retain the connection to the macro cell.

In a case where the connection to the macro cell is retained, after the UE notifies the macro base station that the UE accesses the LPN cell, the macro base station hands over all services of the UE to the LPN cell, or the macro base station hands over a part of services of the UE to the LPN cell. Specifically, after accessing the LPN cell, the UE retains a signaling connection to a source cell and sends a piece of signaling to notify the macro base station; and the macro base station may determine, according to a characteristic of a service of the UE and/or a load condition of the macro base station, whether to hand over all services of the UE to the LPN cell or hand over a part of services of the UE to the LPN cell. A service characteristic may be selected and a load threshold may be determined specifically according to a specific condition of a network. For example, a service having a high security requirement, such as a bank service, is still transferred in an LTE network; and a service such as Internet accessing and games may be transmitted in the LPN cell.

In a case where the connection to the macro cell is retained, the terminal may also provide a man-machine interface to a user, so that the user opts to migrate all services of the UE to the LPN cell or migrate a part of services of the UE to the LPN cell; and then, the terminal communicates with the macro base station and the base station of the LPN cell according to the selection of the user, so as to perform service handover.
Step 506: The base station of the LPN cell obtains the position information of the terminal, and monitors, according to the position information of the UE and the position information of the LPN cell that is stored by the base station, whether the UE leaves the LPN cell.

The base station of the LPN cell saves position deployment information of the LPN cell. Reference may be made to step 501 and step 502 for specific content of the position deployment information and specific implementation of this step. A condition for leaving the LPN cell in this step is just opposite to the condition for approaching the LPN cell, that is, reaching an edge of the coverage range of the LPN cell or within a defined distance to the edge of the coverage range.
Step 507: The base station of the LPN cell sends a leave indication to the UE after it is detected that the UE leaves the LPN cell.

The leave indication may be carried by using RRC dedicated signaling or MAC CE, and specific content of the leave indication may include: the PCI and/or GCI of the LPN cell that the UE is leaving.
Step 508: After receiving the leave indication, the UE stops measurement on the LPN cell according to the PCI and/or GCI in the indication, and disconnects from the LPN cell.

Specifically, in this step, if the radio frequency corresponding to the LPN cell is an independent radio frequency, the UE directly disables data reception and measurement on the radio frequency corresponding to the LPN cell. Otherwise, the UE initiates an inter-frequency or inter-system handover procedure by sending a measurement report to the base station of the LPN cell (that is, the source base station), so as to be handed over to the macro cell, and stops measurement on the LPN cell. A specific handover procedure may be implemented with reference to step 505.

In this embodiment, alternatively, in step 503, after it is detected that the UE approaches the LPN cell, the base station of the macro cell may also directly deliver measurement control information to the UE, so as to start measurement of the UE on the approached LPN cell. The measurement control information carries measurement object information, such as a cell CPI or CGI, or further includes a measurement item and/or measurement report configuration information. Accordingly, in step 404, after the UE receives the configuration control information, the UE may start measurement on the approached LPN cell according to the measurement control information. If the measurement control information includes a measurement item, the UE performs measurement according to the measurement item, for example, signal strength and/or signal quality, in the measurement control information. Otherwise, similar to the foregoing part of this embodiment, the UE measures signal strength and/or signal quality of the LPN cell. Correspondingly, in step 507, after it is detected that the UE leaves the LPN cell, the base station of the LPN cell may send a stop measurement indication to the UE, where the indication includes a stop measurement object, that is, the CGI or CPI of the LPN cell. Accordingly, in step 508, the UE stops measurement on the LPN cell according to the measurement stop indication and initiates handover.

In this embodiment, alternatively, in step 505, when it is detected that the signal strength and/or signal quality satisfies the access condition, the UE reports any one or more of the signal strength and signal quality of the LPN cell under measurement and a measurement event to the base station of the macro cell; the base station of the macro cell determines, according to the information reported by the UE, whether to allow the UE to access the approached LPN cell, and after determining to allow the UE to access the approached LPN cell, sends a message to notify the UE; and the UE accesses the LPN cell after receiving the notification.

In this exemplary preferred embodiment, position information of a terminal and an LPN cell is compared to determine whether to start measurement of the terminal on the LPN cell. On one hand, the terminal does not need to constantly search for a WIFI hotspot cell, which reduces energy consumption for the terminal. On the other hand, because the measurement on the LPN cell is performed regardless of signal quality of a macro cell, the measurement on the LPN cell can also be started according position information even in a case where signal quality of the macro cell is very strong, which improves timeliness of measurement, and makes it possible for the LPN cell to share traffic of the terminal of the macro cell more efficiently. Moreover, the terminal accesses the LPN cell in a case where signal quality of the LPN cell can satisfy service communication of the terminal; compared with a solution in the prior art where the terminal accesses the LPN cell only after signal quality of the macro cell and the LPN cell are different by a certain degree, a possibility for the terminal to access the LPN cell is greatly increased, thereby implementing traffic sharing of the LPN cell for the macro cell more efficiently.

### Exemplary Preferred Embodiment 2

In this embodiment, a terminal obtains, by using a base station of a macro cell, position information of an LPN cell stored in a database on a network side, and compares the position information of the LPN cell with position information of the terminal itself to determine whether to start measurement on the LPN cell; and the terminal accesses the LPN cell when an access condition is satisfied, thereby implementing traffic sharing for the terminal in the macro cell more efficiently.

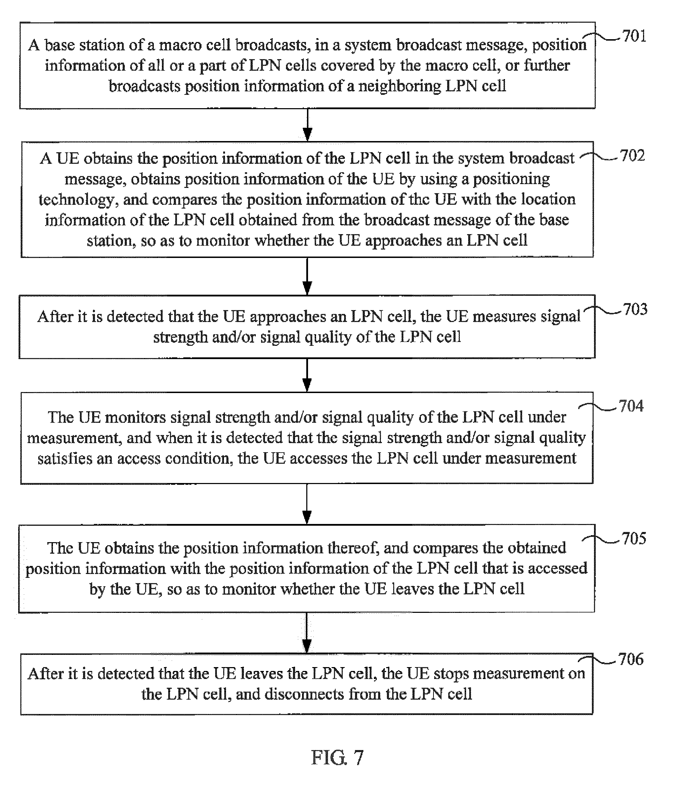

As shown in FIG. 7, this embodiment includes the following steps in an implementation process:
Step 701: A base station of a macro cell broadcasts, in a system broadcast message, position information of all or a part of LPN cells covered by the macro cell, or further broadcasts position information of a neighboring LPN cell.
Step 702: A UE obtains the position information of the LPN cell in the system broadcast message; obtains position information of the UE by using a positioning technology; and compares the position information of the UE with the position information of the LPN cell obtained from the broadcast message of the base station, so as to monitor whether the UE approaches an LPN cell.

A specific comparison solution may be implemented with reference to step 502 described above. A difference lies in that, in this step, if the broadcast message includes position information of multiple LPN cells, the UE needs to compare the position information of the UE with the position information of each LPN cell.
Step 703: After it is detected that the UE approaches an LPN cell, the UE measures signal strength and/or signal quality of the LPN cell.

In this step, a solution for the UE to measure the signal strength and/or signal quality of the LPN cell is implemented with reference to step 504 described above.

Subsequent step 704 is the same as step 505 described above, and similarly, an alternative step to step 505 in the foregoing exemplary preferred embodiment is also applicable.
Step 705: The UE obtains the position information thereof, and compares the obtained position information with the position information of the LPN cell that is accessed by the UE, so as to monitor whether the UE leaves the LPN cell.

In this embodiment, the UE may obtain the position information thereof in real time by using a GPS unit thereof, or obtain the position information thereof by periodically initiating network positioning, for example, initiating OTDOA positioning.
Step 706: After it is detected that the UE leaves the LPN cell, the UE stops measurement on the LPN cell, and disconnects from the LPN cell.

A specific solution for stopping measurement and disconnecting a connection in this step may be implemented with reference to step 508 in the foregoing exemplary preferred embodiment.

Alternatively, in step 703 of this embodiment, after it is detected that the UE approaches an LPN cell, instead of directly starting measurement on the LPN cell, the UE may also notify, by using signaling, the base station of the macro cell of information that the UE approaches an LPN. After receiving the signaling, the base station of the macro cell configures measurement control information for the UE and delivers the measurement control information to the UE, so as to start measurement of the UE on the LPN cell. The measurement control information carries measurement object information, such as a cell CPI or CGI, or further includes a measurement item and/or measurement report configuration information. After the UE receives the configuration control information, the UE may start measurement on the approached LPN cell according to the measurement control information. If the measurement control information includes a measurement item, the UE performs measurement according to the measurement item, for example, signal strength and/or signal quality, in the measurement control information. Otherwise, similar to the foregoing part of this embodiment, the UE measures signal strength and/or signal quality of the LPN cell. Correspondingly, in step 706, after it is detected that the UE leaves the LPN cell, the UE may send signaling to the LPN cell, so as to notify, by using the signaling, the base station of the LPN cell of information of leaving the LPN cell. Accordingly, the base station of the LPN cell sends a stop measurement indication to the UE, where the indication includes a stop measurement object, that is, a CGI or CPI of the LPN cell, and the UE stops measurement on the LPN cell according to the measurement stop indication, and disconnects from the LPN cell.

In this exemplary preferred embodiment, position information of a terminal and an LPN cell is compared to determine whether to start measurement of the terminal on the LPN cell. On one hand, the terminal does not need to constantly search for a WIFI hotspot cell, which reduces energy consumption for the terminal. On the other hand, because the measurement on the LPN cell is performed regardless of signal quality of a macro cell, the measurement on the LPN cell can also be started according position information even in a case where signal quality of the macro cell is very strong, which improves timeliness of measurement, and makes it possible for the LPN cell to share traffic of the terminal of the macro cell more efficiently. Moreover, the terminal accesses the LPN cell in a case where signal quality of the LPN cell can satisfy service communication of the terminal; compared with a solution in the prior art where the terminal accesses the LPN cell only after signal quality of the macro cell and the LPN cell are different by a certain degree, a possibility for the terminal to access the LPN cell is greatly increased, thereby implementing traffic sharing of the LPN cell for the macro cell more efficiently.

### Exemplary Preferred Embodiment 3

In this exemplary preferred embodiment, a third cell having basically the same coverage (where the expression, having basically the same coverage, in this application document indicates that a coverage area of a third cell is equal to or slightly greater than that of an LPN cell, for example, a coverage radius ratio is between 1:1 and 1.1:1) as an LPN cell is deployed, where a frequency of the third cell is the same as a frequency of a macro cell, so that a terminal accessing the macro cell may directly receive a signal of the third cell.

The third cell may be an actual LTE cell or a virtual cell. A base station of the virtual cell sends only synchronous signaling and a system message on the virtual cell, and does not perform service data scheduling. For example, no transmission is performed on a PDCCH for service data scheduling and a PDSCH for sending downlink service data. A PCI of the third cell is selected from one or more specific groups of third cell PCIs.

A UE may store information of a specific third cell PCI group in advance, or the UE may obtain the information of the specific third cell PCI group by receiving a system broadcast message of a base station of a macro cell. When a PCI inferred by the UE according to detected synchronous signaling belongs to the specific third cell PCI group, it may be determined that a third cell exists, and an inter-frequency LPN cell having the same coverage as the third cell is deployed. Further, the inferred PCI may be used to determine which frequency the LPN cell is deployed on, that is, to determine frequency information of the LPN cell.

In this embodiment, the third cell may be deployed by separately placing a base station; or the third cell may be deployed by arranging an additional radio frequency unit on a base station of the LPN cell.

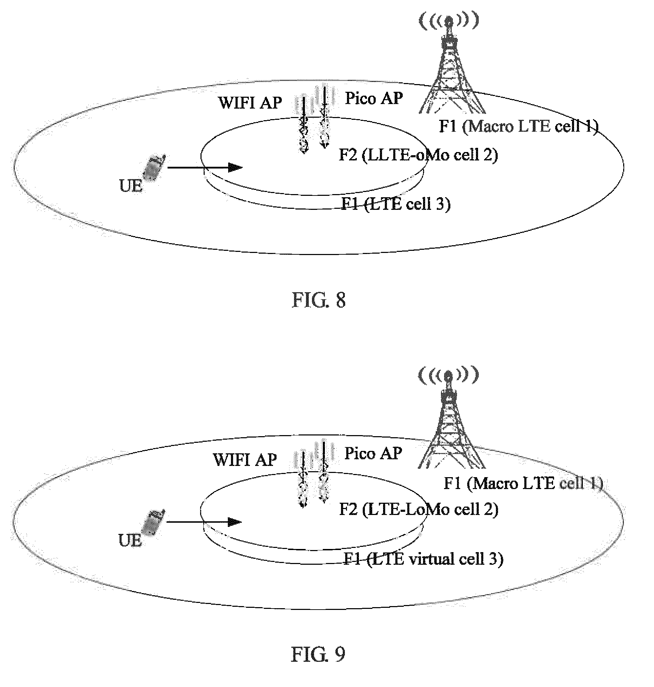

FIG. 8 shows a scenario where a deployed third cell is an LTE cell, where the third cell is an LTE cell 3 deployed by using a WIFI AP; a macro cell is a macro LTE cell 1; and an LPN cell is an LTE-LoMo cell 2 deployed by using a Pico AP. In FIG. 8, the WIFI AP may also be used to deploy the LTE-LoMo cell 2, and the Pico AP is used to deploy the LTE cell 3.

FIG. 9 shows a scenario where a deployed third cell is a virtual LTE cell. A difference from FIG. 8 lies in that the deployed third cell is an LTE virtual cell 3.

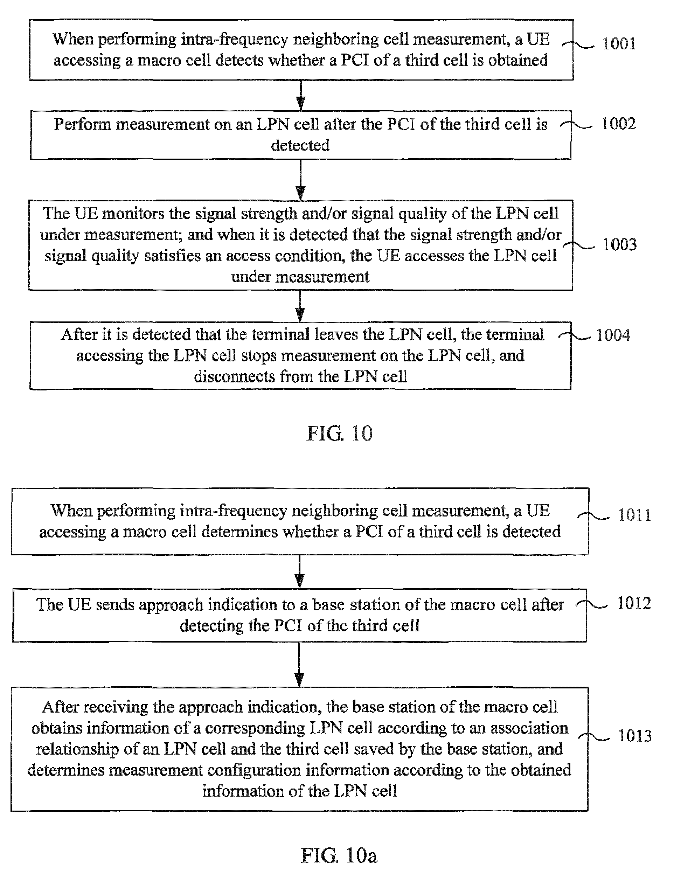

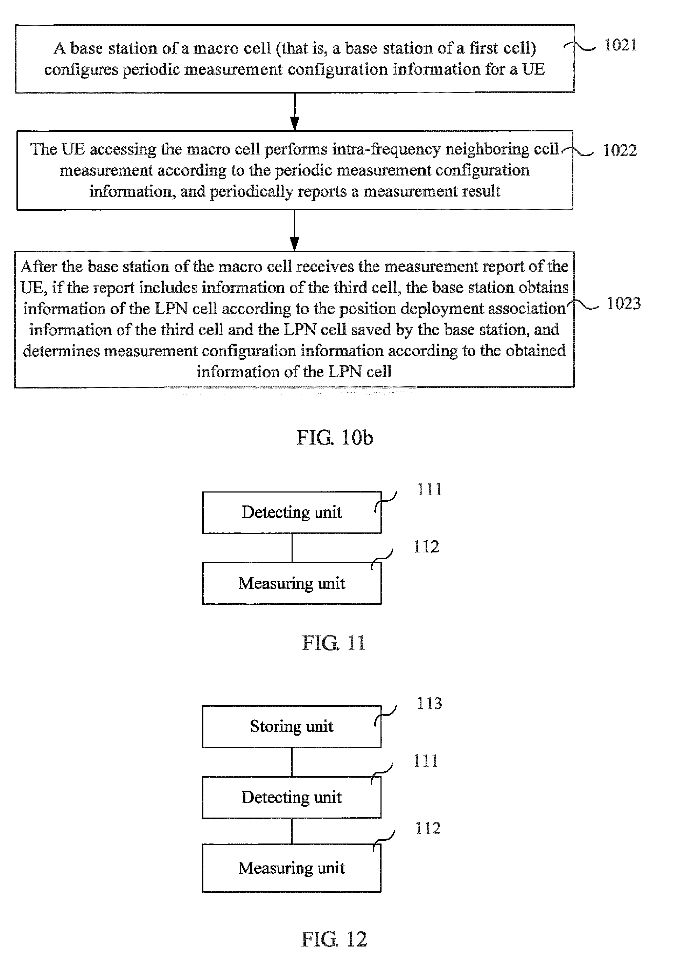

As shown in FIG. 10, in a specific implementation process of this exemplary preferred embodiment, a procedure thereof specifically includes the following steps:
Step 1001: When performing intra-frequency neighboring cell measurement, a UE accessing a macro cell detects whether a PCI of a third cell is obtained.

Specifically, in this step, the obtaining, by the UE, the PCI by detection may be that the UE receives synchronous signaling of an intra-frequency neighboring cell by performing intra-frequency neighboring cell measurement, and then infers the PCI according to information in the received synchronous signaling. A specific method for inferring the PCI according to the synchronous signaling is commonly known to a person skilled in the art, which is not described herein.

In this step, the UE accessing the macro cell determines whether the detected PCI is selected from a specific third cell PCI group, that is, whether the detected PCI belongs to the specific third cell PCI group, and in this way, may determine whether a cell corresponding to the detected PCI is a third cell; and if the cell corresponding to the detected PCI is the third cell, may determine that a terminal approaches a second cell.
Step 1002: After the PCI of the third cell is detected, perform measurement on an LPN cell, that is, measure signal strength and/or signal quality of the LPN cell.

In this step, the UE may directly perform measurement on the LPN cell, for example, directly perform measurement on all supported frequencies other than a frequency of a first cell; or obtain frequency band information of the LPN cell according to information stored by the UE, and then perform measurement according to the frequency band information. Reference may be made to the related description in step 102 for a specific implementation solution. Reference may be made to step 504 may for a specific implementation solution for the UE to measure the signal strength and/or signal quality of the LPN cell.

In this step, instead of directly starting measurement on the LPN cell, the UE may also send an approach indication to the base station of the macro cell after detecting the PCI of the third cell, and the base station of the macro cell configures measurement configuration information regarding the LPN cell for the UE, so as to start measurement of the UE on the LPN cell. Reference may be made to the related description in step 102 and the foregoing steps for a specific implementation solution, which is not described repeatedly herein.
Step 1003: The UE monitors the signal strength and/or signal quality of the LPN cell under measurement; and when it is detected that the signal strength and/or signal quality satisfies an access condition, the UE accesses the LPN cell under measurement.

Specific implementation of this step may be implemented with reference to step 505, which is not described repeatedly herein.
Step 1004: After it is detected that the terminal leaves the LPN cell, the terminal accessing the LPN cell stops measurement on the LPN cell, and disconnects from the LPN cell.

In this step, the terminal monitors the signal strength and/or signal quality of the LPN cell that is accessed by the terminal, and determines, according to whether the cell signal strength is less than a set signal strength threshold and/or signal quality is less than a set signal quality threshold, whether the terminal leaves the LPN cell.

A specific solution of stopping measurement and disconnecting a connection in this step may be implemented with reference to step 508, which is not described repeatedly herein.

In this exemplary preferred embodiment, a terminal detects whether a third cell having basically the same coverage as an LPN cell exists, so as to determine whether to start measurement of the terminal on the LPN cell, which provides a cell measurement solution in a case where multiple cells have overlapping coverage. In this way, on one hand, the terminal does not need to constantly search for a WIFI hotspot cell, which reduces energy consumption for the terminal; on the other hand, because the measurement on the LPN cell is performed regardless of signal quality of the a macro cell, the measurement on the LPN cell can also be started according to information of the third cell having basically the same coverage even in a case where the signal quality of the macro cell is very strong, which improves timeliness of measurement, and makes it possible for the LPN cell to share traffic of the terminal of the macro cell more efficiently. Moreover, the terminal accesses the LPN cell in a case where signal quality of the LPN cell can satisfy service communication of the terminal; compared with a solution in the prior art where the terminal accesses the LPN cell only after signal quality of the macro cell and the LPN cell are different by a certain degree, a possibility for the terminal to access the LPN cell is greatly increased, thereby implementing traffic sharing of the LPN cell for the macro cell more efficiently.

### Exemplary Preferred Embodiment 4

This exemplary preferred embodiment is the same as the foregoing exemplary preferred embodiment in that a third cell having basically the same coverage as an LPN cell (that is, a second cell) is deployed. A specific manner for deploying the third cell may be implemented with reference to the foregoing exemplary preferred embodiment.

Moreover, in this exemplary preferred embodiment, position deployment association information (that is, an association relationship between the LPN cell and the third cell) of the third cell and the LPN cell is further saved on a network side.

The association information of the LPN cell and the third cell saved on the network side may be shown in the following table. The association relationship may be directly saved in a base station of a macro cell and/or a background device of the base station of the macro cell, and/or saved in a dedicated server, for example, an Operation, Administration and Maintenance (Operation Administration and Maintenance, OAM) server, where the base station of the macro cell may obtain required association information by querying the dedicated server.

| **Associated Objects** | **Association Relationship Information** |
|---|---|
| Cell 2 and cell 3 | Same coverage |
| Cell 4 and cell 5 | Same coverage |
| ...... | ...... |
| Cell 7 and cell 9 | Neighboring |

An LPN cell involved in the association information of the LPN cell and the third cell includes an LPN cell within a coverage range of the macro cell, or includes an LPN cell within the coverage range of the macro cell and an LPN cell neighboring the macro cell.

Cell position association information (that is, the association information of the LPN cell and the third cell) may be exchanged by using an X2 interface between base stations. For example, after an LPN cell is added and/or a third cell is added, a base station of the newly added cell may help, by sending an X2 SETUP REQUEST message, an X2 SETUP RESPONSE message, or an X2 ENB configuration update message to the base station of the macro cell (that is, a base station of a first cell), update and improve information of the LPN cell and/or information of the third cell. The information may be position information. The base station of the macro cell may determine association of the two cells according to the received position information of the LPN cell and position information of the third cell, so as to store the association information of the LPN cell and the third cell.

Alternatively, the base station of the newly added cell directly notifies the base station of the macro cell of association information of the LPN cell and the third cell by using the X2 interface. Specifically, the base station of the newly added cell may perform notification by sending an X2 SETUP REQUEST message, an X2 SETUP RESPONSE message, or an X2 ENB configuration update message.

As shown in FIG. 10a, this embodiment may include the following steps in a specific implementation process:
Step 1011: When performing intra-frequency neighboring cell measurement, a UE accessing a macro cell determines whether a PCI of a third cell is detected.

Specifically, in this step, the obtaining, by the UE, the PCI by detection may be that the UE receives synchronous signaling of an intra-frequency neighboring cell by performing intra-frequency neighboring cell measurement, and then infers the PCI according to information in the received synchronous signaling. A specific method for inferring the PCI according to the synchronous signaling is commonly known to a person skilled in the art, which is not described herein.

A UE may store information of a specific third cell PCI group in advance, or the UE may obtain the information of the specific third cell PCI group by receiving a system broadcast message or dedicated signaling of a base station of the macro cell. When the PCI inferred by the UE according to the detected synchronous signaling belongs to the specific third cell PCI group, it may be determined that the third cell exists.
Step 1012: The UE sends an approach indication to the base station of the macro cell after detecting the PCI of the third cell.

The approach indication includes the PCI of the third cell.
Step 1013: After receiving the approach indication, the base station of the macro cell obtains information of a corresponding LPN cell according to an association relationship of an LPN cell and the third cell saved by the base station, and determines measurement configuration information according to the obtained information of the LPN cell.

In the association relationship between the LPN cell and the third cell, the information of the third cell may be PCI information or other information of the third cell. If the information of the third cell is the PCI information, the base station of the macro cell directly queries the association relationship according to the PCI information in the approach indication, so as to determine information of the corresponding LPN cell. If the information of the third cell is other information of the third cell, for example, a CGI, the base station first obtains a corresponding CGI according to the PCI in the approach indication and the information of the third cell saved by the base station, and then determines the information of the corresponding LPN cell according to the CGI.

After the information of the corresponding LPN cell is determined, the base station configures measurement configuration information regarding the LPN cell for the UE according to a frequency band of the LPN cell (where the information of the LPN cell in the association relationship may directly include frequency band information, or may include no frequency band information; and the base station determines the frequency band information according to the CGI or PCI, and correspondence saved by the base station and between the information of the LPN cell and frequency band information), so as to start measurement of the UE on the LPN cell. A solution for the UE to subsequently start measurement according to the measurement configuration information and access the second cell may be implemented with reference to the foregoing embodiments, which is not described repeatedly herein.

### Exemplary Preferred Embodiment 5

This exemplary preferred embodiment is the same as the foregoing exemplary preferred embodiment in that a third cell having basically the same coverage as an LPN cell (that is, a second cell) is also deployed, and position deployment association information (that is, an association relationship between the LPN cell and the third cell) between the third cell and the LPN cell is saved on a network side. This part of the solution is specifically implemented with reference to the foregoing exemplary preferred embodiment, which is not described repeatedly herein.

As shown in FIG. 10b, this exemplary preferred embodiment includes the following steps in an implementation process:
Step 1021: A base station of a macro cell (that is, a base station of a first cell) configures periodic measurement configuration information for a UE.

The periodic measurement configuration information includes a measurement frequency band, a report period, handover hysteresis, and the like. The measurement frequency is a frequency band of the macro cell, that is, a frequency band of the third cell.
Step 1022: The UE accessing the macro cell performs intra-frequency neighboring cell measurement according to the periodic measurement configuration information, and periodically reports a measurement result.
Step 1023: After the base station of the macro cell receives the measurement report of the UE, if the report includes information of the third cell, the base station obtains information of the LPN cell according to the position deployment association information of the third cell and the LPN cell saved by the base station, and determines measurement configuration information according to the obtained information of the LPN cell, and configures it for the UE, so as to start measurement of the UE on the LPN cell.

A solution for the UE to subsequently start measurement according to the measurement configuration information and access the second cell may be implemented with reference to the foregoing embodiments, which is not described repeatedly herein.

In this step, the base station may configure a set of information of the third cell, determine that a third cell exists if the information of the third cell in the measurement report belongs to the set, and then query the association relationship according to the information of the third cell to obtain the information of the corresponding LPN cell.

The base station may also configure no set of information of the third cell. After receiving the measurement report, the base station performs query to determine whether the cell information reported in the measurement report is included in the association relationship; and if yes, determines the associated LPN cell according to the cell information; otherwise, determines that the UE detects no third cell, and may perform no processing on the measurement report.

The information of the third cell may be a PCI, a CGI, or other information.

In the Exemplary Preferred Embodiments 4 and 5, an association relationship between a second cell and a third cell is stored on a network side, so that after determining that a UE detects a third cell, that is, the UE reaches a coverage range of the third cell, a macro base station obtains an associated second cell according to information of the third cell, and delivers measurement configuration information to the UE, so as to start measurement of the UE on the second cell. This provides a cell measurement solution in a case where multiple cells have overlapping coverage. In this way, on one hand, the terminal does not need to constantly search for a WIFI hotspot cell, which reduces energy consumption for the terminal; on the other hand, because the measurement on the LPN cell is performed regardless of signal quality of the LPN cell, the measurement on the LPN cell can also be started according position information even in a case where the signal quality of the macro cell is very strong, which improves timeliness of measurement, and makes it possible for the LPN cell to share the terminal of the macro cell more efficiently. Moreover, the terminal accesses the LPN cell in a case where signal quality of the LPN cell can satisfy service communication of the terminal; compared with a solution in the prior art where the terminal accesses the LPN cell only after signal quality of the macro cell and the LPN cell are different by a certain degree, a possibility for the terminal to access the LPN cell is greatly increased, thereby implementing traffic sharing of the LPN cell for the macro cell more efficiently.

In the method embodiments described above, related parts of the solution may be implemented with reference to each other or interchangeably.

A person of ordinary skills in the art may understand that all or a part of the steps of the method according to the embodiments may be implemented by a program instructing relevant hardware. The program may be stored in a computer readable storage medium. When the program is run, the content of the embodiments of the communication method based on the MIP technology of the present invention may be included. The storage medium mentioned herein may be a ROM/RAM, a magnetic disk, an optical disk, and so on.

An embodiment of the present invention further provides a terminal. As shown in FIG. 11, the terminal includes:
a detecting unit 111, adapted to detect signaling of a third cell, where the third cell has the same frequency as a first cell that is accessed by the terminal; and
a measuring unit 112, adapted to perform measurement on a second cell after the detecting unit 111 detects the signaling of the third cell, where the second cell is associated with the third cell, and the second cell and the first cell are inter-frequency cells.

The first cell may be a macro cell, and the second cell is a cell within a coverage region of the macro cell or a cell neighboring the macro cell.

The second cell may be associated with the third cell in a manner where: the second cell and the third cell have the same coverage, or a coverage range of the third cell includes a coverage range of the second cell, where
the performing measurement on a second cell may include: determining, according to the detected signaling of the third cell, that the terminal approaches the second cell, and performing measurement on the second cell.

As shown in FIG. 12, the terminal may further include:
a storing unit 113, adapted to store information of a specific third cell PCI group, where
the detecting unit 111 may be specifically adapted to perform measurement on an intra-frequency neighboring cell of the first cell; infer, according to synchronous signaling detected in the measurement, a physical cell identifier PCI of a cell that sends the synchronous signaling; and determine whether the PCI belongs to the specific third cell PCI group saved by the storing unit 113.

The measuring unit 112 may be specifically adapted to perform measurement on all other frequencies supported by the terminal after the detecting unit 111 detects the signaling of the third cell.

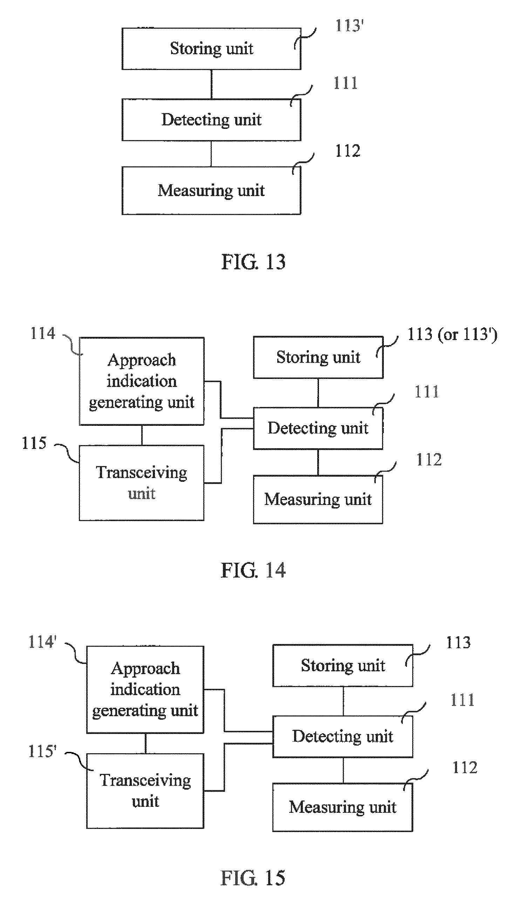

As shown in FIG. 13, the terminal may further include: a storing unit 113', adapted to save correspondence between a specific third cell PCI group and frequency information of the second cell, where
the detecting unit 111 may be specifically adapted to perform measurement on an intra-frequency neighboring cell of the first cell; infer, according to synchronous signaling obtained by measurement, a physical cell identifier PCI of a cell that sends the synchronous signaling; and determine whether the PCI belongs to the specific third cell PCI group saved by the storing unit 113'; and
the measuring unit 112 may be specifically adapted to obtain, according to the correspondence saved by the storing unit 113' and after the detecting unit 111 determines that the inferred PCI belongs to the specific third cell PCI group stored by the storing unit 113'the correspondence, frequency information of the second cell corresponding to the specific third cell PCI group to which the PCI belongs; and perform measurement according to the obtained frequency information of the second cell; or send the frequency information of the second cell to a base station of the first cell by using a transceiving unit in the terminal; receive, by using the transceiving unit in the terminal, measurement configuration information determined according to the frequency information of the second cell by the base station of the first cell and returned by the base station of the first cell; and then perform measurement according to the received measurement configuration information.

As shown in FIG. 14, the terminal may further include:
an approach indication generating unit 114, adapted to generate an approach indication after the detecting unit 111 detects the signaling of the third cell; and
a transceiving unit 115, adapted to send the approach indication to the base station of the first cell, and receive measurement configuration information returned by the base station of the first cell, where the measurement configuration information includes measurement configuration information of all inter-frequency cells that are within a coverage range of and/or neighboring the first cell, where
the measuring unit 112 may be specifically adapted to perform, after the detecting unit 111 detects the signaling of the third cell, measurement according to the measurement configuration information received by the transceiving unit 115.

As shown in FIG. 15, the terminal may further include:
an approach indication generating unit 114', adapted to generate, after the detecting unit 111 determines that the inferred PCI belongs to the specific third cell PCI group, an approach indication including the inferred PCI; and
a transceiving unit 115', adapted to send the approach indication to the base station of the first cell, and receive measurement configuration information returned by the base station of the first cell, where the measurement configuration information includes measurement configuration information of a cell corresponding to the PCI, that is, includes measurement configuration information of the second cell determined by the base station according to the PCI, where
the measuring unit 112 may be specifically adapted to perform, after the detecting unit 111 detects the signaling of the third cell, measurement according to the measurement configuration information received by the transceiving unit 115'.

The storing unit 113 may be further adapted to save correspondence between the specific third cell PCI group and the frequency information of the second cell.

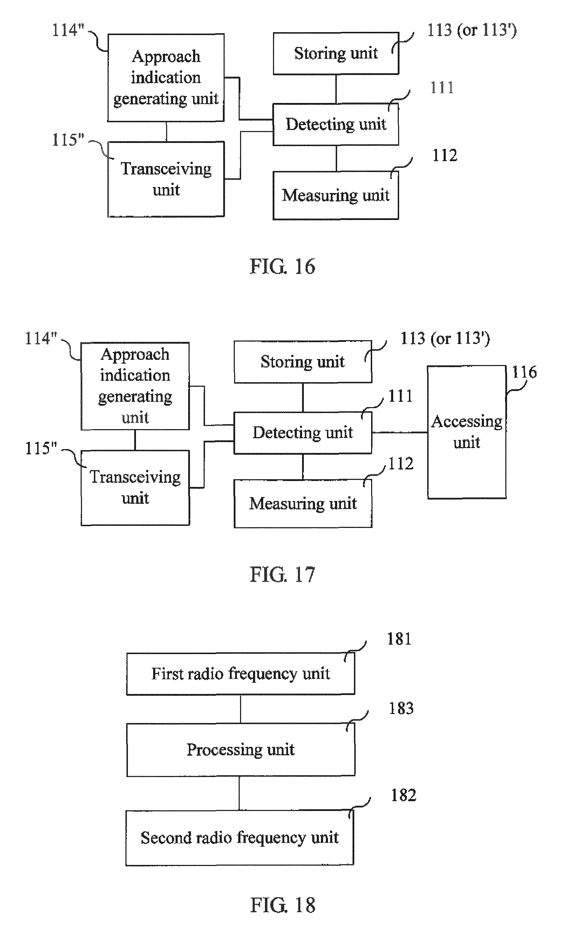

As shown in FIG. 16, the terminal may further include:
an approach indication generating unit 114", adapted to obtain, according to the correspondence stored by the storing unit 113 (or 113') and after the detecting unit 111 determines that the inferred PCI belongs to the specific third cell PCI group, the correspondence frequency information of the second cell corresponding to the specific third cell PCI group to which the inferred PCI belongs, and generate an approach indication including the obtained frequency information of the second cell; and
a transceiving unit 115", adapted to send the approach indication to the base station of the first cell, and receive measurement configuration information returned by the base station of the first cell, where the measurement configuration information includes measurement configuration information corresponding to the frequency information of the second cell in the approach indication, where
the measuring unit 112 may be specifically adapted to perform, after the detecting unit 111 detects the signaling of the third cell, measurement according to the measurement configuration information received by the transceiving unit 115".

The information stored in the storing unit 113 (or 113') may be stored in the terminal in advance or be obtained from a network side by using the transceiving unit 115 (115' or 115"). Reference may be made to the related description in the first method embodiment for a specific obtaining solution.

As shown in FIG. 17, the terminal may further include:
an accessing unit 116, adapted to enable, according to a result of measurement performed by the measuring unit 112 on the second cell and after determining that signal quality of the second cell can satisfy service communication of the terminal, the terminal to access the second cell.

The accessing unit 116 may be further adapted to disconnect a signaling connection between the terminal and the first cell, or further adapted to retain a signaling connection between the terminal and the first cell.

In this embodiment, a specific solution about how the terminal accesses the cell and how to perform measurement may be implemented with reference to a corresponding solution of the method embodiments described above.

As shown in FIG. 18, an embodiment of the present invention provides a base station, including:
a first radio frequency unit 181, adapted to form a second cell;
a second radio frequency unit 182, adapted to form a third cell which is an inter-frequency cell of the second cell; and
a processing unit 183, adapted to generate synchronous signaling according to a PCI in a third cell PCI group, and send the generated synchronous signaling on the third cell by using the second radio frequency unit 182, so that a terminal within a coverage range of the third cell infers, by receiving the synchronous signaling, the PCI belonging to the specific third cell PCI group. The third cell PCI group is the specific third cell PCI group mentioned in other embodiments, which have the same meaning.

The processing unit 183 may be specifically adapted to send only synchronous signaling and a system message on the third cell. Specifically, reference may be made to the related description involving a virtual cell in the foregoing embodiments for further implementation of the only synchronous signaling and system message that are sent.

The third cell that the second radio frequency unit 182 is adapted to form may have the same coverage as the second cell, or a coverage range of the third cell includes a coverage range of the second cell.

The processing unit 183 may be further adapted to send information of the second cell and the third cell to a base station of a first cell by using a communicating unit 183 in the base station;
or may be further adapted to send association information of the second cell and the third cell to the base station of the first cell by using the communicating unit 183 in the base station.

The processing unit 183 may be specifically adapted to generate an X2 SETUP REQUEST message, an X2 SETUP RESPONSE message, or an X2 ENB configuration update message including the information sent to the base station of the first cell, and send the message to a base station of a macro cell by using the communicating unit.

The first cell has the same frequency as the third cell; the first cell and the second cell are inter-frequency cells; and the second cell is associated with the third cell.

The first cell may be a macro cell, and the second cell is a cell within a coverage region of the macro cell or a cell neighboring the macro cell.

The second cell may be associated with the third cell in a manner where: the second cell and the third cell have the same coverage, or a coverage range of the third cell includes a coverage range of the second cell.

The second cell and the third cell in this embodiment are the second cell and the third cell in the method and terminal embodiments described above. Correspondingly, the solution for the terminal to interact with the network side on the second cell and the solution for the terminal to interact with the network side on the third cell may both be executed by the base station according to this embodiment. Similarly, the solution involving interaction between the base station of the second cell and the third cell and a network device, such as another base station, may also be executed by the base station according to this embodiment.

In the terminal embodiment, a third cell associated with a second cell and having the same frequency as a first cell is deployed, so that a terminal accessing the first cell can determine, by detecting signaling of the third cell, whether the second cell exists. In this way, the terminal may perform measurement on the second cell in a timely manner, which provides a cell measurement solution that is different from that in the prior art. Moreover, when the solution is applied to a scenario where multiple cells have overlapping coverage, on one hand, the solution reduces energy consumption for the UE because no constant cell searching is required; on the other hand, in a case where the first cell is a macro cell and the second cell is a low-power node cell, and a signal of the macro cell is strong, measurement on the low-power node cell can also be started by using the solution, where the measurement is started regardless of an impact of the signal of the macro cell, so that the low-power node cell can share traffic of the macro cell more quickly and efficiently.

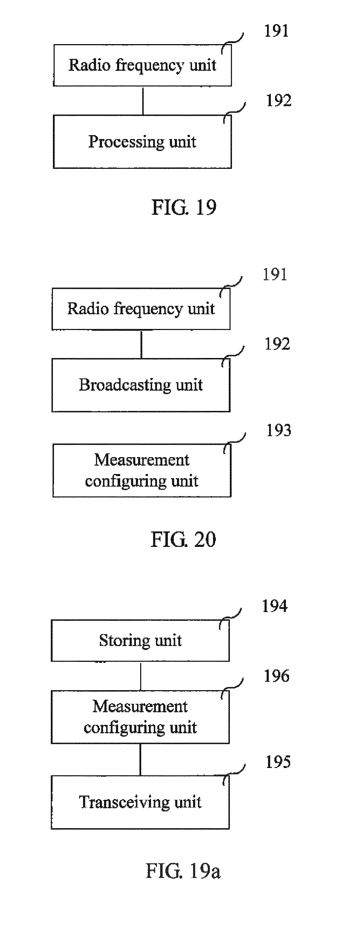

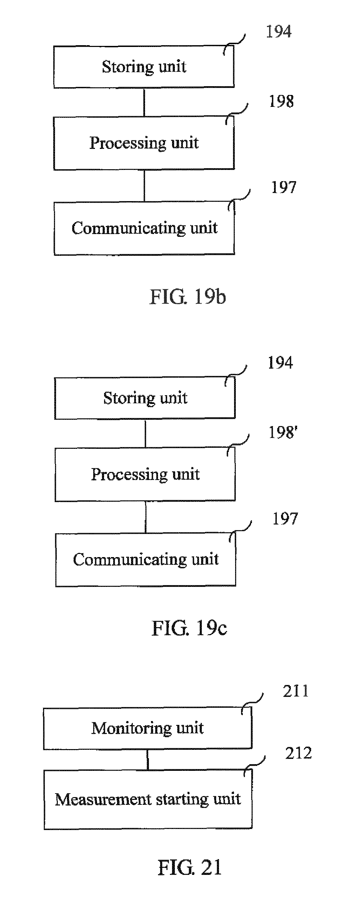

As shown in FIG. 19, an embodiment of the present invention provides another base station, including:
a radio frequency unit 191, adapted to form a first cell; and
a broadcasting unit 192, adapted to broadcast, on the first cell, information of a specific third cell PCI group, and/or broadcast correspondence between information of a specific third cell PCI group and frequency information of a second cell, where a PCI in the specific third cell PCI group corresponds to a third cell which is an intra-frequency cell of the first cell, and the second cell is an inter-frequency cell of the first cell and is associated with the third cell.

In this embodiment, the first cell may be a macro cell, and the second cell is a cell within a coverage region of the macro cell or a cell neighboring the macro cell.

The second cell may be associated with the third cell in a manner where: the second cell and the third cell have the same coverage, or a coverage range of the third cell includes a coverage range of the second cell.

As shown in FIG. 20, the base station may further include:
a measurement configuring unit 193, adapted to receive an approach indication from a terminal of the first cell by using the radio frequency unit; obtain frequency information of an inter-frequency cell within a coverage range of and/or neighboring the first cell according to the approach indication; determine measurement configuration information according to the obtained frequency information of the inter-frequency cell; and deliver, on the first cell, the measurement configuration information to the terminal;
or adapted to receive, from a terminal of the first cell, an approach indication including a PCI of the third cell; obtain frequency information of the second cell corresponding to the PCI of the third cell in the approach indication according to the approach indication and correspondence stored by the base station and between the specific third cell PCI group and frequency information of the second cell; determine measurement configuration information according to the obtained frequency information of the second cell; and deliver, on the first cell, the measurement configuration information to the terminal;
or adapted to receive, from a terminal of the first cell, an approach indication including frequency information of the second cell; determine measurement configuration information according to the frequency information of the second cell in the approach indication; and deliver, on the first cell, the measurement configuration information to the terminal.

In this embodiment, the first cell or macro cell is the first cell or macro cell in the method and terminal embodiments described above. The solution executed by the base station of the first cell or macro cell in the method and terminal embodiments described above may be executed by the base station according to this embodiment.

The embodiment provides a network system, where the network system may include:
a first base station, adapted to form a first cell;
a second base station, adapted to form a second cell which is an inter-frequency cell of the first cell; and
a third base station, adapted to form a third cell having the same coverage as the second cell, and send, on the third cell, synchronous signaling for a terminal to infer a PCI of the third cell, where the third cell is an intra-frequency cell of the first cell, and the PCI is a PCI in a specific third cell PCI group.

The second base station and the third base station may be the same base station or be different base stations.

The first cell may be a macro cell, and the second base station is adapted to form the second cell which is an inter-frequency of the macro cell, where the second cell is within a coverage range of the macro cell, or neighbors the macro cell.

The first base station is further adapted to broadcast, on the first cell, information of a specific third cell PCI group, and/or broadcast correspondence between information of a specific third cell PCI group and frequency information of the second cell;
and/or
the first base station is further adapted to receive, on the first cell, an approach indication from a terminal; obtain frequency information of an inter-frequency cell within a coverage range of and/or neighboring the first cell according to the approach indication; determine measurement configuration information according to the obtained frequency information of the inter-frequency cell; and deliver; on the first cell; the measurement configuration information to the terminal;
or further adapted to receive, on the first cell, an approach indication from a terminal and including a PCI of the third cell; obtain frequency information of the second cell corresponding to the PCI of the third cell in the approach indication according to the approach indication and correspondence stored by the base station and between the specific third cell PCI group and frequency information of the second cell; determine measurement configuration information according to the obtained frequency information of the second cell; and deliver, on the first cell, the measurement configuration information to the terminal;
or further adapted to receive, on the first cell, an approach indication from a terminal and including frequency information of the second cell; determine measurement configuration information according to the frequency information of the second cell in the approach indication; and deliver, on the first cell, the measurement configuration information to the terminal.

In this embodiment, the involved first cell, second cell, and third cell all refer to the first cell, second cell, and third cell in the method and terminal embodiments described above. The solution executed by the base stations of the cells in the method embodiments may be correspondingly executed by the first base station, the second base station, or the third base station in this embodiment.

In the base station and network system embodiments described above, a third cell associated with a second cell and having the same frequency as a first cell is deployed, so that a terminal accessing the first cell can determine, by detecting signaling of the third cell, whether the second cell exists. In this way, the terminal may perform measurement on the second cell in a timely manner, which supports, on a network side, the cell measurement solution described above and different from that in the prior art. Moreover, when the solution is applied to a scenario where multiple cells have overlapping coverage, on one hand, the solution reduces energy consumption for the UE because no constant cell searching is required; on the other hand, in a case where the first cell is a macro cell and the second cell is a low-power node cell, and a signal of the macro cell is strong, measurement on the low-power node cell can also be started by using the solution, where the measurement is started regardless of an impact of the signal of the macro cell, so that the low-power node cell can share traffic of the macro cell more quickly and efficiently.

As shown in FIG. 19a, an embodiment of the present invention further provides a base station, where the base station includes:
a storing unit 194, adapted to store association information of a second cell and a third cell, where the third cell is an intra-frequency cell of a first cell formed by the base station, and the second cell is an inter-frequency cell of the first cell;
a transceiving unit 195, adapted to receive identification information of the third cell from a terminal, where the terminal accesses the first cell; and
a measurement configuring unit 196, adapted to obtain, according to correspondence stored by the storing unit 194 and the identification information of the third cell received by the transceiving unit 195, information of the second cell which is associated with the third cell, and generate measurement configuration information regarding the second cell and deliver the measurement configuration information to the terminal.

As shown in FIG. 19b, the base station shown in FIG. 19a may further include:
a communicating unit 197, adapted to receive information, send by a second base station, of the second cell and the third cell that are controlled by the second base station; or adapted to receive association information, sent by a second base station, of the second cell and the third cell that are controlled by the second base station; or adapted to receive information, sent by a second base station, of the second cell controlled by the second base station and information, sent by a third base station, of the third cell controlled by the third base station; and
a processing unit 198, adapted to generate association information of the second cell and the third cell according to the received information, and store the association information to the storing unit 194.

The information received by the communicating unit 197 may be carried in an X2 SETUP REQUEST message, an X2 SETUP RESPONSE message, or an X2 ENB configuration update message.

As shown in FIG. 19c, an embodiment of the present invention further provides another base station, where the base station includes:
a communicating unit 197, adapted to receive information, send by a second base station, of a second cell and a third cell controlled by the second base station; or adapted to receive association information, sent by a second base station, of the second cell and the third cell that are controlled by the second base station; or adapted to receive information, sent by a second base station, of the second cell controlled by the second base station and information, sent by a third base station, of the third cell controlled by the third base station, where the third cell has the same frequency as a first cell that is formed by the base station, and the second cell and the first cell are inter-frequency cells; and
a processing unit 198', adapted to generate association information of the second cell and the third cell according to the received information, and store the association information to a storing unit 194.

Preferably, the information received by the communicating unit 197 may be carried in an X2 SETUP REQUEST message, an X2 SETUP RESPONSE message, or an X2 ENB configuration update message.

In the two base station embodiments described above, the first cell has the same frequency as the third cell, and the first cell and the second cell are inter-frequency cells; and the second cell is associated with the third cell.

The first cell may be a macro cell, and the second cell is a cell within a coverage region of the macro cell or a cell neighboring the macro cell.

The second cell may be associated with the third cell in a manner where: the second cell and the third cell have the same coverage, or a coverage range of the third cell includes a coverage range of the second cell.

By using the solution according to the two base station embodiments, a base station obtains and stores, in the base station itself, information of a second cell and a third cell which are associated, which can help a terminal to determine whether a cell that is accessed by the terminal has an associated cell, or can help a terminal accessing a first cell to obtain information of the second cell associated with the third cell that can be detected by the terminal, so that the terminal can perform measurement on the associated second cell.

As sown in FIG. 21, the embodiment further provides a network device, where the network device includes:
a monitoring unit 211, adapted to monitor, according to position information of a second cell obtained from a base station of a first cell and position information of a terminal accessing the first cell, whether the terminal approaches the second cell; and
a measurement starting unit 212, adapted to start, when the monitoring unit detects that the terminal approaches the second cell, measurement of the terminal on the approached second cell.

The first cell may be a macro cell, and the monitoring unit 211 may be specifically adapted to monitor, according to the position information of the second cell obtained from a base station of the macro cell and the position information of the terminal accessing the macro cell, whether the terminal approaches the second cell.

The network device may be a base station, and the monitoring unit 211 is specifically adapted to obtain the position information of the terminal, obtain the position information of the second cell saved in the base station, and determine, according to the obtained position information of the terminal and information of the second cell, whether the terminal approaches the second cell.

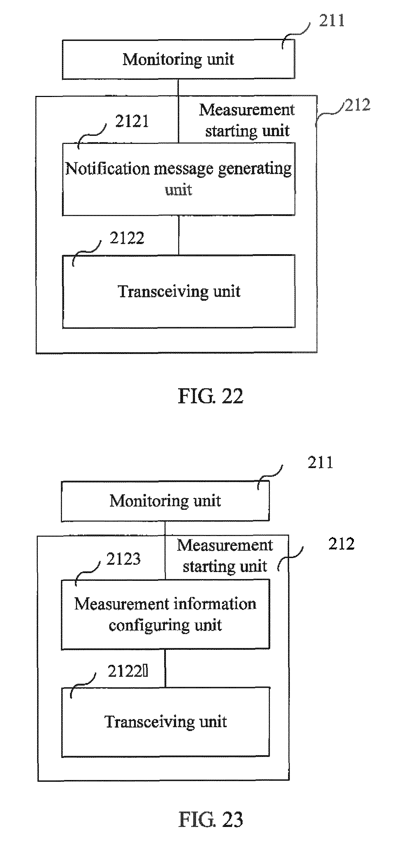

As shown in FIG. 22, when the network device is the base station, the measurement starting unit 212 may include:
a notification message generating unit 2121, adapted to generate a notification message according to the information determined by the monitoring unit 211 that the terminal approaches the second cell, where the notification message is used to notify the information that the terminal approaches the second cell; and
a transceiving unit 2122, adapted to deliver the notification message generated by the notification message generating unit 2121 to the terminal, so that the terminal starts measurement on the approached second cell according to the notification message.

Alternatively, as shown in FIG. 23, the measurement starting unit 212 may include:
a measurement configuration information configuring unit 2123, adapted to configure measurement configuration information for the terminal according to the information determined by the monitoring unit 211 that the terminal approaches the second cell; and
a transceiving unit 2122', adapted to deliver, to the terminal, the measurement configuration information configured by the measurement configuration information configuring unit for the terminal, so that the terminal starts measurement on the approached second cell according to the configured measurement configuration information.

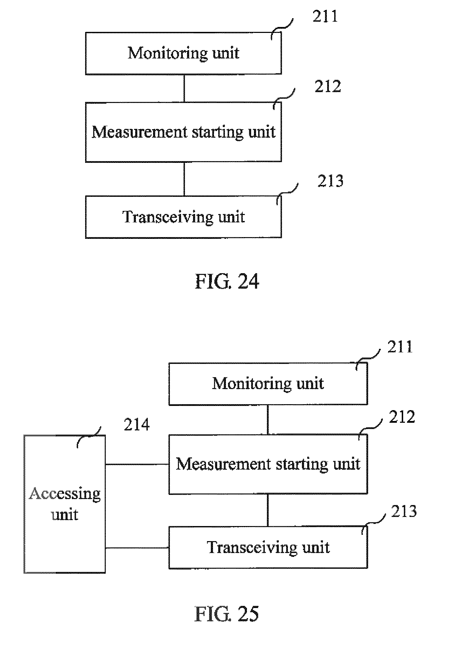

The network device may also be a terminal, and as shown in FIG. 24, the terminal may further include:
a transceiving unit 213, adapted to receive the position information of the second cell sent by the base station of the first cell, where
the monitoring unit 211 is specifically adapted to obtain the position information of the second cell from the transceiving unit 213, obtain the position information of the terminal, and determine, according to the obtained position information of the second cell and the position information thereof, whether the terminal approaches the second cell.

The transceiving unit 213 may be specifically adapted to receive a system broadcast message of the first cell sent by the base station of the first cell, where the system broadcast message includes the position information of the second cell, where
the monitoring unit 211 is specifically adapted to obtain the position information of the second cell from the system broadcast message received by the transceiving unit, obtain the position information of the terminal, and determine, according to the obtained position information of the second cell and the position information of the terminal, whether the terminal approaches the second cell.

The transceiving unit 213 may be further adapted to receive a system broadcast message of the first cell sent by the base station of the first cell, where the broadcast message includes frequency information of the approached second cell, where
the measurement starting unit 212 may be specifically adapted to start, when the monitoring unit 211 detects that the terminal approaches the second cell, measurement on the approached second cell according to the frequency information of the second cell in the system broadcast message received by the transceiving unit 213. The starting, by the measurement starting unit 212, the measurement on the second cell may specifically be: directly measuring, by the measurement starting unit 212, signal strength and/or signal quality of the cell.

The measurement starting unit 212 may be specifically adapted to generate, when the monitoring unit 211 detects that the terminal approaches the second cell, a notification message to be sent to the base station of the first cell, where the notification message includes the information of the second cell which the terminal approaches; and start measurement on the approached second cell according to the measurement configuration information received by the transceiving unit 213, where
the transceiving unit 212 may be further adapted to send the notification message generated by the measurement starting unit 212 to the base station of the first cell, and receive the measurement configuration information, configured by the base station of the first cell, of the approached second cell.

As shown in FIG. 25, the network device may further include:
an accessing unit 214, adapted to control, when the signal quality, measured by the measurement starting unit, of the approached second cell can satisfy service communication of the terminal, the terminal to access the first cell by using the transceiving unit 213.

The accessing unit 214 may be further adapted to disconnect a signaling connection between the UE and the first cell, or retain a signaling connection between the UE and the first cell.

In this embodiment, the position information of the terminal and the second cell is compared to determine whether to start measurement of the terminal on the second cell, which provides a cell measurement solution which is different from that in the prior art. Moreover, when the solution is applied to a scenario where multiple cells have overlapping coverage, on one hand, the solution reduces energy consumption for the UE because no constant cell searching is required; on the other hand, in a case where the first cell is a macro cell and the second cell is a low-power node cell, and a signal of the macro cell is strong, measurement on the low-power node cell can also be started by using the solution, where the measurement is started regardless of an impact of the signal of the macro cell, so that the low-power node cell can share traffic of the macro cell more quickly and efficiently.

The solution executed by the units in the terminal and network device may be specifically implemented with reference to the method embodiments described above.
The present invention is shown and described with reference to some preferred embodiments of the present invention. However, a person of ordinary skills in the art should understand that variations in form and detail may be made to the present invention without departing from the spirit and scope of the present invention.

## Claims

1. A cell measurement method, comprising:
detecting, by a terminal accessing a first cell, signaling of a third cell; and
performing measurement on a second cell after the signaling of the third cell is detected, wherein
the first cell has the same frequency as the third cell; the first cell and the second cell are inter-frequency cells; and the second cell is associated with the third cell.

2. The method according to claim 1, wherein the first cell is a macro cell, and the second cell is a cell within a coverage region of the macro cell or a cell neighboring the macro cell.

3. The method according to claim 1 or 2, wherein the second cell is associated with the third cell in a manner where: the second cell and the third cell have the same coverage, or a coverage range of the third cell comprises a coverage range of the second cell, wherein
the performing measurement on a second cell comprises: determining, according to the detected signaling of the third cell, that the terminal approaches the second cell or enters the coverage range of the second cell, and then performing measurement on the second cell.

4. The method according to any one of claims 1 to 3, wherein the terminal saves information of a specific third cell physical cell identifier PCI group, wherein
the detecting, by a terminal, signaling of a third cell comprises:
performing, by the terminal, intra-frequency neighboring cell measurement; inferring, according to synchronous signaling detected in the measurement, a PCI of a cell that sends the synchronous signaling; and determining whether the PCI belongs to the saved specific third cell PCI group, so as to determine whether the detected synchronous signaling is the signaling of the third cell.

5. The method according to any one of claims 1 to 4, wherein the performing measurement on a second cell comprises:
performing, by the terminal, measurement on all frequencies that are supported by the terminal and different from the frequency of the first cell.

6. The method according to claim 5, wherein the performing, by the terminal, measurement on the second cell on all frequencies that are supported by the terminal and different from the frequency of the first cell comprises:
determining, by the terminal, whether to enable a GAP; and if yes, performing measurement on the second cell on all the supported frequencies that are different from the frequency of the first cell according to the GAP, and sending a GAP pattern to a network side; otherwise, directly performing measurement on the second cell on all the supported other frequencies.

7. The method according to claim 4, wherein the terminal further saves correspondence between the specific third cell PCI group and frequency information of the second cell, wherein
the performing, by the terminal, measurement on a second cell after the signaling of the third cell is detected comprises:
obtaining, by the terminal according to the correspondence after determining that the inferred PCI belongs to the specific third cell PCI group, frequency information of the second cell corresponding to the specific third cell PCI group to which the PCI belongs; and
performing measurement according to the obtained frequency information of the second cell; or sending the frequency information of the second cell to a base station of the first cell, receiving measurement configuration information determined according to the frequency information of the second cell by the base station of the first cell and returned by the base station of the first cell, and then performing measurement according to the received measurement configuration information.

8. The method according to any one of claims 1 to 4, wherein before the performing measurement on a second cell, the method further comprises:
sending, by the terminal, information of the third cell or an approach indication to a base station of the first cell, and receiving measurement configuration information returned by the base station of the first cell, wherein
the performing measurement on a second cell comprises: performing measurement according to the received measurement configuration information.

9. The method according to claim 8, wherein the received measurement configuration information comprises: measurement configuration information determined, according to frequency information of an inter-frequency cell within the coverage range of or neighboring the first cell, by the base station of the first cell after receiving the approach indication.

10. The method according to claim 8, wherein the approach indication comprises the PCI, of the third cell, detected by the terminal; and
the received measurement configuration information comprises: measurement configuration information determined by the base station of the first cell according to obtained frequency information of the second cell after receiving the approach indication, wherein the frequency information of the second cell is obtained according to the PCI in the approach indication and correspondence between the third cell PCI group and frequency information of the second cell and saved by the base station of the first cell;
or comprises: measurement configuration information determined by the base station of the first cell according to determined frequency information of the second cell after receiving the approach indication, wherein the second cell associated with the third cell is determined according to a cell association relationship table configured in the base station of the first cell and the PCI comprised in the approach indication.

11. The method according to claim 8, wherein the sent information of the third cell comprises: a measurement report that is periodically reported by the terminal after performing intra-frequency neighboring cell measurement according to measurement configuration information delivered by the base station of the first cell, wherein
the received measurement configuration information which is returned by the base station of the first cell comprises: measurement configuration information determined by the base station of the first cell according to determined frequency information of the second cell, wherein the second cell associated with the third cell is determined according to a third cell identifier in the measurement report and a cell association relationship table configured in the base station of the first cell.

12. The method according to any one of claims 1 to 11, wherein after the starting, by the terminal, measurement on the second cell, the method further comprises:
accessing, by the terminal, the second cell when signal quality of the second cell under measurement can satisfy service communication of the terminal.

13. An information processing method, comprising:
receiving, by a base station of a first cell, association information, sent by a second base station, of a second cell and/or a third cell controlled by the second base station; receiving association information, sent by a second base station, of a second cell controlled by the second base station and a third cell controlled by a third base station; receiving association information, sent by a third base station, of a second cell controlled by a second base station and a third cell controlled by the third base station; or receiving association information, from an operation management system, of a second cell and a third cell, wherein the third cell has the same frequency as a first cell that is formed by the base station, and the second cell and the first cell are inter-frequency cells; and
generating the association information of the second cell and the third cell according to the received information, and storing the association information.

14. The method according to claim 13, wherein the received information is carried in an X2 setup request SETUP REQUEST message, an X2 setup response SETUP RESPONSE message, or an X2 ENB Configuration Update ENB configuration update message.

15. A terminal, comprising:
a detecting unit, adapted to detect signaling of a third cell, wherein the third cell has the same frequency as a first cell that is accessed by the terminal; and
a measuring unit, adapted to perform measurement on a second cell after the detecting unit detects the signaling of the third cell, wherein the second cell is associated with the third cell, and the second cell and the first cell are inter-frequency cells.

16. The terminal according to claim 15, wherein the terminal further comprises:
a storing unit, adapted to store information of a specific third cell PCI group, wherein
the detecting unit is specifically adapted to perform measurement on an intra-frequency neighboring cell of the first cell; infer, according to synchronous signaling detected in the measurement, a physical cell identifier PCI of a cell that sends the synchronous signaling; and determine whether the PCI belongs to the specific third cell PCI group saved by the storing unit.

17. The terminal according to claim 15 or 16, wherein the measuring unit is specifically adapted to perform, after the detecting unit detects the signaling of the third cell, measurement on all frequencies that are supported by the terminal and different from a frequency of the first cell.

18. The terminal according to claim 15, wherein the terminal further comprises: a storing unit, adapted to save correspondence between a specific third cell PCI group and frequency information of the second cell, wherein
the detecting unit is specifically adapted to perform measurement on an intra-frequency neighboring cell of the first cell; infer, according to synchronous signaling obtained by measurement, a PCI of a cell that sends the synchronous signaling; and determine whether the PCI belongs to the specific third cell PCI group saved by the storing unit, so as to determine whether the detected synchronous signaling is the signaling of the third cell; and
the measuring unit is specifically adapted to obtain, according to the correspondence saved by the storing unit and after the detecting unit determines that the inferred PCI belongs to the specific third cell PCI group stored by the storing unit, frequency information of the second cell corresponding to the specific third cell PCI group to which the PCI belongs;
and perform measurement according to the obtained frequency information of the second cell; or send the frequency information of the second cell to a base station of the first cell by using a transceiving unit in the terminal, receive, by using the transceiving unit in the terminal, measurement configuration information determined according to the frequency information of the second cell by the base station of the first cell and returned by the base station of the first cell, and then perform measurement according to the received measurement configuration information.

19. The terminal according to claim 15 or 16, wherein the terminal further comprises:
an approach indication generating unit, adapted to generate an approach indication after the detecting unit detects the signaling of the third cell; and
a transceiving unit, adapted to send the approach indication to a base station of the first cell, and receive measurement configuration information returned by the base station of the first cell, wherein the measurement configuration information comprises measurement configuration information of all inter-frequency cells that are within a coverage range of and/or neighboring the first cell, wherein
the measuring unit is specifically adapted to perform, after the detecting unit detects the signaling of the third cell, measurement according to the measurement configuration information received by the transceiving unit.

20. The terminal according to claim 16, wherein the terminal further comprises:
an approach indication generating unit, adapted to generate, after the detecting unit determines that the inferred PCI belongs to the specific third cell PCI group, an approach indication comprising the inferred PCI; and
a transceiving unit, adapted to send the approach indication to a base station of the first cell, and receive measurement configuration information returned by the base station of the first cell, wherein the measurement configuration information comprises measurement configuration information of the second cell determined by the base station according to the PCI, wherein
the measuring unit is specifically adapted to perform measurement according to the measurement configuration information received by the transceiving unit.

21. The terminal according to claim 16, wherein storing unit is further adapted to save correspondence between the specific third cell PCI group and frequency information of the second cell;
the terminal further comprising:
an approach indication generating unit, adapted to obtain, according to the correspondence saved by the storing unit and after the detecting unit determines that the inferred PCI belongs to the specific third cell PCI group, frequency information of the second cell corresponding to the third cell PCI group to which the inferred PCI belongs, and generate an approach indication comprising the obtained frequency information of the second cell; and
a transceiving unit, adapted to send the approach indication to the base station of the first cell, and receive measurement configuration information returned by the base station of the first cell, wherein the measurement configuration information comprises measurement configuration information corresponding to the frequency information of the second cell in the approach indication, wherein
the measuring unit is specifically adapted to perform, after the detecting unit detects the signaling of the third cell, measurement according to the measurement configuration information received by the transceiving unit.

22. The terminal according to claim 15, wherein the terminal further comprises:
a transceiving unit, adapted to receive first measurement configuration information delivered by a base station of the first cell and comprising a frequency band of the first cell; send a measurement report generated by the measuring unit to the base station of the first cell; and receive second measurement configuration information that is returned by the base station of the first cell according to the measurement report, wherein the second measurement configuration information comprises measurement configuration information regarding the second cell which is an inter-frequency cell of the first cell, wherein
the measuring unit is specifically adapted to perform intra-frequency neighboring cell measurement according to the first measurement configuration information received by the transceiving unit; periodically generate a measurement report, wherein the measurement report comprises identification information of the third cell; and perform measurement according to the second measurement configuration information received by the transceiving unit.

23. The terminal according to any one of claims 15 to 22, wherein the terminal further comprises:
an accessing unit, adapted to enable, according to a result of measurement performed by the measuring unit on the second cell and after determining that signal quality of the second cell can satisfy service communication of the terminal, the terminal to access the second cell.

24. A base station, comprising:
a first radio frequency unit, adapted to form a second cell;
a second radio frequency unit, adapted to form a third cell which is an inter-frequency cell of the second cell; and
a processing unit, adapted to generate synchronous signaling according to a PCI in a third cell PCI group, and send the generated synchronous signaling on the third cell by using the second radio frequency unit.

25. The base station according to claim 24, wherein the processing unit is adapted to send only the synchronous signaling and a system message on the third cell.

26. The base station according to claim 25, wherein the second radio frequency unit is adapted to form a third cell, wherein the third cell is an inter-frequency cell of and has the same coverage as the second cell; or form a third cell, wherein the third cell is an inter-frequency cell of the second cell and has a coverage range comprising a coverage range of the second cell.

27. The base station according to claim 25 or 26, wherein the processing unit is further adapted to send information of the second cell and the third cell to a base station of the first cell by using a communicating unit in the base station;
or further adapted to send association information of the second cell and the third cell to the base station of the first cell by using a communicating unit in the base station.

28. The base station according to claim 27, wherein the processing unit is specifically adapted to generate an X2 SETUP REQUEST message, an X2 SETUP RESPONSE message, or an X2 ENB configuration update message comprising the information sent to the base station of the first cell, and send the message to the base station of the first cell by using the communicating unit.

29. A base station, comprising:
a radio frequency unit, adapted to form a first cell; and
a broadcasting unit, adapted to broadcast, on the first cell, information of a specific third cell PCI group, and/or broadcast correspondence between information of a specific third cell PCI group and frequency information of a second cell, wherein a PCI in the specific third cell PCI group corresponds to a third cell which is an intra-frequency cell of the first cell, and the second cell is an inter-frequency cell of the first cell and is associated with the third cell.

30. The base station according to claim 29, wherein the base station further comprises:
a measurement configuring unit, adapted to receive, on the first cell, an approach indication from a terminal, obtain frequency information of an inter-frequency cell within a coverage range of and/or neighboring the first cell according to the approach indication, determine measurement configuration information according to the obtained frequency information of the inter-frequency cell, and deliver, on the first cell, the measurement configuration information to the terminal;
or adapted to receive, on the first cell, an approach indication from a terminal and comprising a PCI of the third cell; obtain frequency information of the second cell corresponding to the PCI of the third cell in the approach indication according to the approach indication and correspondence stored by the base station and between the specific third cell PCI group and frequency information of the second cell; determine measurement configuration information according to the obtained frequency information of the second cell; and deliver, on the first cell, the measurement configuration information to the terminal;
or adapted to receive, on the first cell, an approach indication from a terminal and comprising frequency information of the second cell; determine measurement configuration information according to the frequency information of the second cell in the approach indication; and deliver, on the first cell, the measurement configuration information to the terminal.

31. A base station, comprising:
a storing unit, adapted to store association information of a second cell and a third cell, wherein the third cell is an intra-frequency cell of a first cell formed by the base station, and the second cell is an inter-frequency cell of the first cell;
a transceiving unit, adapted to receive identification information of the third cell from a terminal, wherein the terminal accesses the first cell; and
a measurement configuring unit, adapted to obtain, according to correspondence stored by the storing unit and the identification information of the third cell received by the transceiving unit, information of the second cell which is associated with the third cell, and generate measurement configuration information regarding the second cell and deliver the measurement configuration information to the terminal.

32. The base station according to claim 31, wherein the base station further comprises:
a communicating unit, adapted to receive information, send by a second base station, of the second cell and the third cell that are controlled by the second base station; or adapted to receive association information, sent by a second base station, of the second cell and the third cell that are controlled by the second base station; or adapted to receive information, sent by a second base station, of the second cell controlled by the second base station and information, sent by a third base station, of the third cell controlled by the third base station; and
a processing unit, adapted to generate association information of the second cell and the third cell according to the received information, and store the association information to the storing unit.

33. The base station according to claim 31, wherein the information received by the communicating unit is carried in an X2 SETUP REQUEST message, an X2 SETUP RESPONSE message, or an X2 ENB configuration update message.

34. A base station, comprising:
a communicating unit, adapted to receive information, send by a second base station, of a second cell and/or a third cell controlled by the second base station; or adapted to receive association information, sent by a second base station, of the second cell and the third cell that are controlled by the second base station; or adapted to receive information, sent by a second base station, of the second cell controlled by the second base station and information, sent by a third base station, of the third cell controlled by the third base station, wherein the third cell has the same frequency as a first cell that is formed by the base station, and the second cell and the first cell are inter-frequency cells; and
a processing unit, adapted to generate association information of the second cell and the third cell according to the received information, and store the association information to the storing unit.

35. The base station according to claim 34, wherein the information received by the communicating unit is carried in an X2 SETUP REQUEST message, an X2 SETUP RESPONSE message, or an X2 ENB configuration update message.

36. A network system, comprising:
a first base station, adapted to form a first cell;
a second base station, adapted to form a second cell which is an inter-frequency cell of the first cell; and
a third base station, adapted to form a third cell having the same coverage as the second cell, and send, on the third cell, synchronous signaling for a terminal to infer a PCI of the third cell, wherein the third cell is an intra-frequency cell of the first cell, and the PCI is a PCI in a specific third cell PCI group.

37. The network system according to claim 36, wherein
the first base station is specifically adapted to form the first cell; and
the second base station is adapted to form the second cell which is an inter-frequency cell of the first cell, wherein the second cell is within a coverage range of the first cell, or the second cell neighbors the first cell.

38. The network system according to claim 36 or 37, wherein the first base station is further adapted to broadcast, on the first cell, information of the specific third cell PCI group, and/or broadcast correspondence between information of the specific third cell PCI group and frequency information of the second cell;
and/or
the first base station is further adapted to receive, on the first cell, an approach indication from a terminal, obtain frequency information of an inter-frequency cell within a coverage range of and/or neighboring the first cell according to the approach indication, determine measurement configuration information according to the obtained frequency information of the inter-frequency cell, and deliver, on the first cell, the measurement configuration information to the terminal;
or further adapted to receive, on the first cell, an approach indication from a terminal and comprising a PCI of the third cell; obtain frequency information of the second cell corresponding to the PCI of the third cell in the approach indication according to the approach indication and correspondence stored by the base station and between the specific third cell PCI group and frequency information of the second cell; determine measurement configuration information according to the obtained frequency information of the second cell; and deliver, on the first cell, the measurement configuration information to the terminal;
or further adapted to receive, on the first cell, an approach indication from a terminal and comprising frequency information of the second cell; determine measurement configuration information according to the frequency information of the second cell in the approach indication; and deliver, on the first cell, the measurement configuration information to the terminal.
